# EUROPÄISCHE PATENTSCHRIFT

(11) **EP 3 445 274 B1**
(45) Veröffentlichungstag und Bekanntmachung des Hinweises auf die Patenterteilung: **04.11.2020**
(21) Anmeldenummer: 17717198.0
(22) Anmeldetag: 18.04.2017
(51) Int. Cl.: A61C 13/08, A61C 13/09, A61C 13/00

(54) **ZAHNTEILBOGEN SOWIE VERFAHREN ZUR HERSTELLUNG EINES ZAHNTEILBOGENS**
DENTAL PIECE ARCH AND METHOD FOR PRODUCING A DENTAL PIECE ARCH
COURBURE DE PAS DE DENT ET PROCEDE DE PRODUCTION D'UNE COURBURE DE PAS DE DENT

(30) Priorität: 18.04.2016 EP 16165760
(43) Veröffentlichungstag der Anmeldung: 27.02.2019
(73) Patentinhaber: Ivoclar Vivadent AG, 9494 Schaan (LI)
(72) Erfinder: BERTAGNOLLI, Martin, 39025 Naturns (IT); HÄFELE, Clemens, 6833 Weiler (AT); HAGENBUCH, Konrad, 9469 Haag (CH); KERSCHBAUMER, Harald, 6833 Klaus (AT); LANBACHER, Karl, 39023 Laas (IT); MITTERHOFER, Martin, 39021 Latsch/Morter (IT); FACHER, Andreas, deceased (IT)
(74) Vertreter: Splanemann, Rainer
(86) Internationale Anmeldenummer: PCT/EP2017/059169
(87) Internationale Veröffentlichungsnummer: WO 2017/182461

(56) Entgegenhaltungen:
- AT-A4- 516 056
- DE-A1-102005 042 091
- JP-A- 2007 236 465
- US-A1- 2009 104 584

## Beschreibung

Die Erfindung betrifft einen Zahnteilbogen, gemäß dem Oberbegriff von Anspruch 1, sowie ein Verfahren zum Herstellen eines Zahnteilbogens, gemäß dem Oberbegriff von Anspruch 18.

Es ist seit langem bekannt, dass Dentalrestaurationen, insbesondere Zähne, per CAD/CAM passgenau hergestellt werden können. Entsprechende Rohlinge liegen häufig in Form einer Scheibe vor und werden einer Fräsbearbeitung unterworfen.

Es ist auch seit langem bekannt, z. B. aus der US 5,151,044, derartige Blöcke mehrschichtig aufzubauen. Dies ermöglicht es, die Dentinmassen im Vergleich zu den Schneidemassen unterschiedlich einzufärben und so ein ästhetisch befriedigenderes Ergebnis zu erzielen.

Zähne müssen bekanntlich relativ zueinander ausgerichtet werden, so dass gemäß der US 5,151,044 sich voneinander weg erstreckende Vorsprünge vorgesehen sind, die sowohl als Fräsbasis dienen können, als auch Hilfsmittel für die Ausrichtung bilden können.

Mehrschichtige Zähne - und entsprechende Rohlinge, sei es aus Komposit, Kunststoffmaterialien oder unterschiedlichen Keramikmaterialien - sind in zahlreichen Ausgestaltungen bekannt geworden. Man hat beispielsweise versucht, Halbzeuge bereitzustellen, die nach Vorfabrikation des Halbzeugs die Erzeugung eines Zahns innerhalb einer vorgegebenen Raumstruktur ermöglichen. Insofern sei auf die EP 0 850 601 A2 und die DE 19 654 055 A1 verwiesen.

Ein besonders gelungenes Beispiel für die Bereitstellung eines dentalen Restaurationsteils ist die Lösung gemäß der EP 2 486 892 A1. Gemäß dieser wird der unterschiedlichen Transparenzstruktur von unterschiedlichen Dentalrestaurationsmaterialien Rechnung getragen, um eine möglichst naturähnliche Anmutung zu vermitteln.

Aufgrund der Feinstrukturierung über die dortigen Voxel ist eine sehr nuancenreiche und insofern bestens abgestimmte Anmutung erzielbar. Das dort angesprochene Verfahren erfordert jedoch einen beträchtlichen Aufwand und ist insofern eher für das Hochpreissegment geeignet.

Bei der Herstellung von Dentalrestaurationsteilen unterscheidet man zwischen aufbauenden oder generativen Verfahren einerseits und abtragenden Verfahren andererseits. Zu den aufbauenden Verfahren gehört die Herstellung von Dentalrestaurationsteilen mittels Brennverfahren oder Pressverfahren. Hierzu wird zunächst ein Positivmodell basierend auf einem Scan der Umgebung des einzusetzenden Dentalrestaurationsteils per CAD/CAM erstellt, beispielsweise aus Kunststoff oder Wachs. Dieses wird abgeformt, beispielsweise über eine Muffel, und das Positivmodell thermisch entfernt, so dass ein dem zu erzeugenden Dentalrestaurationsteils entsprechender Hohlraum verbleibt.

Bei einem typischen Pressverfahren wird Keramikmaterial in den Hohlraum eingepresst. Dieses Verfahren ist zeitlich recht aufwändig und erfordert auch jedenfalls eine thermische Behandlung, bietet aber den Vorteil einer hohen Oberflächengüte und auch guten Qualitiät des Dentalrestaurationteils, das gemäß einem von der vorliegenden Anmelderin entwickelten Verfahren auch mehrschichtig sein kann.

Zu derartigen Verfahren zählt man auch die Bereitstellung von industriell vorgefertigten, beispielsweise über einen Brennvorgang oder einen Pressvorgang hergestellten Restaurationsteilen, wie beispielsweise einer Prefassette, die dann nach Anpassung an die Ursituation eingebracht werden.

Demgegenüber wesentlich zeitsparender ist die Erzeugung von Dentalrestaurationsteilen aus zu fräsenden Blöcken, zudem das Verfahren gemäß der vorstehend genannten US 5 151 044 gehört. Ein weiteres abtragendes Verfahren, dass mit mehreren Schichten arbeitet, lässt sich der EP 807 422 A1 entnehmen. Dieses Verfahren strebt eine langlebige Dentalrestauration an, ohne dass ästhetische Gesichtspunkte im Vordergrund stehen würden.

Patienten erwarten typischerweise die Bereitstellung von preisgünstigem Zahnersatz in guter, also auch ästhetisch ansprechender Qualität. Zugleich soll der Zahnersatz in angemessener Zeit bereitstehen.

Um diese Anforderungen zu erfüllen werden typischerweise bei beiden vorstehend genannte Verfahren Zähne oder zumindest Kronen in unterschiedlichen Größen und wenigstens den Hauptfarben bereitgehalten. Teilweise wird dann die Maltechnik eingesetzt, um die ästhetische Feinanpassung an den Patienten vorzunehmen.

Zähne können bekanntlich patientenspezifisch sehr unterschiedliche Größen haben. Auch bei Bereitstellung lediglich der Grundfarben ergibt sich eine erhebliche Vielzahl von Zähnen für die Lagerhaltung, die dann noch individualisiert werden müssen.

Gerade für Voll- oder Teilprothesen, aber auch für Dentalrestaurationen, die mehrere nebeneinander liegende Zähne betreffen, sind daher Zahnteilbögen vorgeschlagen worden. Unter einem Zahnteilbogen versteht man mindestens 2 einander in mesialer oder distaler Richtung benachbarte Zähne, deren mesiale/distale Achsen voneinander schneiden oder zumindest nicht parallel zueinander sind, so dass sie insofern einen Bogen bilden.

Typische Zahnteilbögen umfassen drei oder vier Zähne, können im Einzelfall aber auch aus zwei oder fünf Zähnen bestehen.

Derartige Zahnteilbögen sind vergleichsweise gut zu fertigen, beispielsweise in Frästechnik, erfordern jedoch auch wesentlich größere Anforderungen an die Logistik und Lagerhaltung.

Das Dokument US2009104584 A1 betrifft einen schichtweise aufgebauten Schneide-oder Eckzahn mit einer eine Dentinmasse wenigstens teilweise abdeckenden Schneidemasse. Die Dentinmasse weist an ihrem okklusalen Ende sich in okklusaler Richtung erstreckende Vorsprünge und/oder Unebenheiten auf.

In Hinblick auf die bestehenden Schwierigkeiten liegt der Erfindung die Aufgabe zugrunde, einen Zahnteilbogen und damit eine unter Verwendung dieses hergestellten Dentalrestauration, gemäß dem Oberbegriff von Anspruch 1, sowie ein Verfahren zum Herstellen eines Zahnteilbogens, gemäß dem Oberbegriff von Anspruch 18, zu schaffen, die eine ästhetisch ausgesprochen befriedigendes Restaurationsergebnis bei geringen Herstell- und Lagerhaltungskosten ermöglichen.

Diese Aufgabe wird erfindungsgemäß durch die Ansprüche 1 beziehungsweise 18 gelöst. Vorteilhafte Weiterbildungen ergeben sich aus den Unteransprüchen.

Erfindungsgemäß ist es vorgesehen, dass ein Zahnteilbogen, der sich mindestens über zwei Zahnbereiche erstreckt, nämlich einen Primärpositions-Zahnbereich und einen weiteren Zahnbereich, der distaler angeordnet ist, in besonderer Weise gestaltet ist.

Unter Primärpositions-Zahnbereich sei hier der mesialer angeordnete Zahnbereich verstanden, oder der mesialste Zahnbereich bei mindestens drei Zahnbereichen.

Erfindungsgemäß wird ausgenutzt, dass dieser typischerweise am stärksten ästhetisch relevant ist, also besonders sorgfältig gestaltet sein sollte.

Erfindungsgemäß ist nun ein Zahnteilbogen mit mindestens zwei Schichten oder Massen vorgesehen, nämlich mindestens einer Dentinmasse und einer Schneidemasse. Die - drei dimensionale - Grenzfläche zwischen diesen ist in besonderer Weise gestaltet. Am Primärpositions-Zahnbereich ist die Grenzfläche mit einer dem natürlichen Dentin-Grenzflächenverlauf entsprechenden Balligkeit ausgebildet und insofern stark strukturiert. Auch beim nächsten Zahnbereich, sozusagen dem Sekundärpositions-Zahnbereich, ist eine ballige Strukturierung vorgesehen, angenährt an den natürlichen Dentin-Grenzflächenverlauf. Dieser ist jedoch weniger stark ausgeprägt als beim Primärpositions-Zahnbereich, und der Übergang zwischen Primärpositions- und Sekundärpositions-Zahnbereich ist als Welle ausgebildet, die in konkaver Richtung verläuft, sowohl aus vestibulärer Richtung betrachtet, als auch aus okklusaler Richtung betrachtet.

Insofern liegt zwischen Primärposition und Sekundärposition grenzflächenseitig eine Einschnürung vor, die jedoch deutlich geringer als 50 Prozent ist und insbesondere weniger als 20 Prozent beträgt.

Erfindungsgemäß ist insgesamt eine Wellung der dreidimensionalen Grenzfläche vorgesehen, deren Amplitude in distaler Richtung betrachtet abnimmt, besonders in einem Teilbereich. Die Abnahme der Wellungsamplitude kann z. B. 3 bis 10 Prozent betragen.

Die erfindungsgemäße Lösung ist insbesondere für die Fräsbearbeitung, also für ein abtragendes Verfahren geeignet. Für die Bereitstellung der erfindungsgemäßen Wellung der Grenzfläche werden erfindungsgemäß bevorzugt verschiedene Zahnformen und Zahngrößen gleichsam per CAD aufeinandergelegt. Für den Primärpostitions-Zahnbereich wird hierzu ein "Best Fit" eingestellt, und der so gemittelte Grenzschichtverlauf wird dann der Herstellung zugrunde gelegt.

Es versteht sich hierbei, dass nicht nur der Primärzahn, sondern auch die weiteren Zähne, die dem Zahnteilbogen zugrunde gelegt werden, hierbei richtig aufgestellt sind, also auch beispielsweise entsprechend den anatomischen Kurven im Mund (Speekurve, Wilsonkurve usw.)

Die vorstehend genannte Wellung bezieht sich auf die sich dreidimensional erstreckende Grenzfläche zwischen Dentinmasse und Schneidemasse. Insofern besteht die Wellung sowohl aus vestibulärer Richtung betrachtet als auch okklusaler Richtung betrachtet. Wellentäler entsprechen hier je den Zahnzwischenräumen und Wellenberge den Zahnbereichen, also den Primärpositions-Zahnbereichen, den Sekundärpositions-Zahnbereichen usw.

Erfindungsgemäß wird die Grenzfläche, aber auch die Außenfläche der Schneidemasse, zunächst per CAD festgelegt. Die Festlegung der Außenfläche erfolgt - zumindest bei Teilzahnbögen - basierend auf einem Scan des Mundinnenraumes des Patienten, unter Verwendung von Zahnbibliotheken, die hinsichtlich der Form, Größe und des Aufbaus auf bewährte Zähne, die den natürlichen Zähnen in ihrer bestehenden Variation angenähert sind, zurückgreifen.

Erfindungsgemäß ist nun ein Fräsrohling vorgesehen, der aus mindestens zwei Materialien, beispielsweise aus Dentinmasse und aus Schneidemasse, oder gegebenenfalls auch noch aus einer dritten oder sogar vierten Masse besteht. Die Grenzfläche ist erfindungsgemäß in besonderer Weise gewellt, dergestalt, dass die Wellungsamplitude in distaler Richtung betrachtet abnimmt.

Es versteht sich, dass für die Erfindung günstigerweise scheibenförmige Standardrohlinge mit einem Standarddurchmesser von 98 oder 100mm eingesetzt werden können. Derartige Rohlinge können in zahlreiche Bereiche, beispielsweise drei, fünf, zehn oder sogar zwanzig Bereiche unterteilt sein, die erfindungsgemäß für die Realisierung von Dentalrestaurationen vorgesehen sein können. Es ist je ein Primärpositions-Zahnbereich vorgesehen, der durch eine besonders ballig ausgestaltete Grenzfläche der Dentinmasse gekennzeichnet ist und dessen Position bekannt ist und bei dem Fräsvorgang dementsprechend berücksichtigt wird.
Zur Erzeugung von Dentalrestaurationen aus dem Fräsrohling ist zunächst der Fräsrohling mit seiner speziell geformten Grenzfläche im CAD/CAM-Programm virtuell hinterlegt. Basierend auf dieser Hinterlegung wird ein geeigneter Bereich für die Bereitstellung des erfindungsgemäßen Zahnteilbogens ausgewählt, und es wird die Hüllkurve der Schneidemasse, aber auch diejenige der Basalfläche im Bereich der Dentinmasse, per CAD festgelegt. Die Festlegung kann mindestens teilweise nach automatisierten Vorgaben erfolgen, gegebenenfalls aber auch mit Benutzereingriff.

Die basierend hierauf erzeugten STL-Daten werden der Dentalfräsmaschine zugeleitet. Der erfindungsgemäße Fräsrohling weist mindestens einen, bevorzugt zwei Referenzpunkte auf, die eine exakte Zuordnung zwischen hinterlegtem virtuellen Bild und der tatsächlichen Einspann-Position des Fräsrohlings in dem zugehörigen Werkstückhalter ermöglichen.

Basierend auf den STL-Daten wird nun der erfindungsgemäße Zahnteilbogen aus dem Fräsrohling herausgefräst, typischerweise unter Belassung von Haltestegen, die ein Herauslösen ermöglichen.

In an sich bekannterweise wird die Teilbenutzung des Fräsrohlings, beispielsweise also einer entsprechend geformten Scheibe, abgespeichert, so dass der CAD/CAM-Vorrichtung bekannt ist, welche Bereiche des Fräsrohlings bereits verbraucht sind, so dass für die nächste Herstellungsanforderung eines Zahnteilbogens ein bislang unbenutzter Bereich ausgewählt wird.

Die erfindungsgemäßen Zahnteilbögen haben gegenüber der Verwendung von Einzelzähnen erhebliche Vorteile. Wenn sie beispielsweise für Prothesen verwendet werden, stehen ideal ausgestaltete Klebeverbundflächen zur Verfügung, was die Qualität der insofern erzeugten Prothese oder Teilprothese verbessert.

Im Bereich der Interdentalräume wird durch die erfindungsgemäße Wellung verhindert, dass die Dentinschicht, die meist weniger transparent und eher dunkel gehalten ist, deutlich hervortritt. Der sichtbarste der Interdentalräume, nämlich der Interdentalraum zwischen dem Primärpostitions-Zahnbereichs und dem Sekundärpositions-Zahnbereichs hat die stärkste Einschnürung und damit die geringste Sichtbarkeit der Dentinschicht. Dies gilt sowohl, wenn ein besonders großer als auch wenn ein besonders kleiner Zahn aus dem Fräsrohling herausgefräst wird, da dann in diesem Interdentalraum oder Zahnzwischenraum der Unterschied der Position zwischen den kleinen und großen Zähnen am geringsten ist.

Der erfindungsgemäße Zahnteilbogen zeichnet sich insofern durch eine "Best-Fit-Auslegung" für den Primärpositions-Zahnbereich aus. Dieser ist stets der sichtbarste, während distal angeordnete Zahnbereiche typischerweise ästhetisch weniger relevant sind.

Überraschend lässt sich eine erhebliche Kostenersparnis durch die Vorfertigung entsprechender Fräsrohlinge, die dann in beliebiger geeigneter Weise zu Zahnteilbögen verarbeitet werden, erzielen, ohne dass ästhetische Kompromisse eingegangen werden müssten.

Bei Zahnteilbögen ist neben der Größe der einzelnen Zähne auch der Bogenradius eine relevante Größe. In vorteilhafter Ausgestaltung der Erfindung wird hierbei zur Erzielung eines ästhetisch befriedigendem Ergebnisses wiederum der Primärpositions-Zahnbereich nach "Best-Fit" dergestalt angeordnet, dass die Schneidemasse um die ballig ausgestaltete Dentinmasse bereits im Designstadium eine Mindestschichtstärke allseits, also in okklusaler und vestibulärer Richtung, aber auch in mesialer Richtung des Primärpositions-Zahnbereichs beziehungsweise in lingualer Richtung, aufweist.

Typischerweise ist bei kleineren Zahngrößen der Bogenradius geringer. Auch bei einer größeren Bogenlänge mit beispielsweise sechs Zähnen wird beim Designen bevorzugt der virtuelle Zahnteilbogen so verschwenkt, dass eine minimale Schichtstärke der Schneidemasse im okklusalen und vestibulären Bereich nicht unterschritten wird, zumindest in den Zahnbereichen. Der Primärpositions-Zahnbereich ist hierbei als Schwenkzentrum festgelegt.

Erfindungsgemäß besonders günstig ist es, dass auch verschieden große Fragmente oder Zahnteilbögen, insgesamt zwischen zwei und bevorzugt fünf, oder im Extremfall sogar bis 14 Zähnen, in angepasster Farb- und Transluzenzabstimmung in einem gefräst werden können. Hierbei ergibt sich der Zahnteilbogen eigene Vorteil, dass eine zusätzliche Ausrichtung von Einzelzähnen zueinander nicht mehr erforderlich ist, was die vertikale Ausrichtung der Zähne erleichtert.

Erfindungsgemäß ist es besonders günstig, dass die Kauflächen der Zahnbereiche des erfindungsgemäßen Zahnteilbogens relativ zueinander vorab, also während der Designphase, festgelegt werden können.

Wenn anhand der Abformung auch funktionale, also dynamische anatomische Daten bereitgestellt werden, lässt sich hierdurch die relative Kauflächengestaltung des Oberkiefer- und des Unterkiefer-Zahnteilbogens auch nach funktionalen Gesichtspunkten optimieren.

In vorteilhafter Ausgestaltung der Erfindung ist es vorgesehen, die Dentinschicht in horizontaler Richtung zu spiegeln, um Zahnteilbögen für rechts und links bereitzustellen. Durch an die anatomischen Begebenheiten angepasste Ausgestaltungen der jeweiligen Schneidemassenschichten lässt sich dennoch eine Individualisierung realisieren.

Eine weitere Möglichkeit der Individualisierung liegt in der Festlegung der Höhenlage der Dentinmasse oder Dentinmassenschicht. Durch Absenkung in die gingivale Richtung wird der Anteil der Schneidemasse erhöht und durch Verlagerung in okklusaler Richtung reduziert.

In einer weiteren bevorzugten Ausgestaltung ist es vorgesehen, eine zusätzliche Schicht basal beziehungsweise gingival der Dentinschicht vorzusehen.

In einer weiteren Ausgestaltung ist es vorgesehen, eine transluzente Zwischenschicht zwischen der Schneidemassenschicht und der Dentinmassenschicht vorzusehen.

In vorteilhafter Ausgestaltung der Erfindung ist es vorgesehen, dass die Sequenz der Wellung sich von mesial nach distal betrachtet ändert. Je nach Art des Zahnteilbogens kann dies eine Zunahme der Frequenz sein, beispielsweise wenn der Primärpositions-Zahnbereich dem Zahn 1 entspricht oder eine Abnahme, wenn der Zahnteilbogen beispielsweise die Position 3 bis 7 abdeckt.

In erfindungsgemäß günstiger Ausgestaltung ist es vorgesehen, einen Zahnteilbogen mit den Zähnen 1 und 2 vorzusehen, und einen weiteren mit den Zähnen 3, 4, 5, 6, 7. Typischerweise sind bei einer derartigen Teilung die Krümmungsunterschiede der Bögen zwischen kleinen und großen Zähnen beziehungsweise Zahnsätzen nicht so groß, und es besteht sofern die zusätzliche Schwenkmöglichkeit an der Teilung zwischen dem Zahn 2 und dem Zahn 3. Diese ist auch aufgrund des natürlichen Farbwechsels Frontzahn - Eckzahn bevorzugt.

Eine alternative Teilungsmöglichkeit ist 123/4567.

In vorteilhafter Ausgestaltung ist ein Zahnteilbogen im Schnitt parallel zur Okklusionsebene betrachtet, von der mesialen Seite ausgehend am mesialen Ende im Grunde als Kreisbogen realisiert.

Dieser Kreisbogen geht über in eine Wellenlinie, die im wesentlichen einer Sinuskurve, jedoch mit sich änderner Frequenz und Amplitude, entspricht. Mindestens teilweise nimmt die Frequenz in mesial/distaler Richtung ab, was nicht ausschließt, dass in Teilbereichen auch eine Frequenz-Zunahme erfolgt. Gerade bei einem Zahnteilbogen für die Zähne 3-4-5-6-7 kann das Amplitudenmaximum gegebenenfalls auch erst nach dem ersten Zahn, also dem 3er erreicht werden. Insbesondere gilt dies bei kürzeren Zahnteilbögen als 5 Zähne umfassende Zahnteilbögen, da das Ampltiudenmaximum bevorzugt näher am mesialen als am distalen Ende ist

Die Erstellung eines Zahnteilbogens wird bevorzugt basierend auf Zahnbibliotheks-Formen realisiert. Zahnbibliotheken haben typischerweise ein Größenspektrum, und erfindungsgemäß werden verschiedene Zahnformen bevorzugt miteinander überlagert. Die Belagerung wird bevorzugt virtuell vorgenommen, so dass dem Grunde nach eine mittlere Zahnform ergibt. Zur Anpassung an unterschiedliche Zahngrößen werden auch diese überlagert, so dass erfindungsgemäß bevorzugt eine Anpassung an eine mittlere Zahngröße vorgenommen wird.

Es versteht sich, dass bei Bedarf auch auf die Zahngrößenanpassung mindestens teilweise verzichtet werden kann, so dass beispielsweise drei Zahnteilbögengrößen angeboten werden können, also etwa eine kleine, eine mittlere und eine große Zahngröße des Zahnteilbogens.

Bei der Zahngrößenberücksichtigung kann bei Bedarf auch mit einem insbesondere 3 dimensionalen Skalierungsfaktor gearbeitet werden, so dass dem erfindungsgemäßen Zahnteilbogen bei dieser Ausgestaltung eine kombiniert empirisch und mathematische Erzeugungsanweisung zu Grunde liegt.

Bei der Realisierung von hinteren Zahnteilbögen, also solchen die beispielsweise mit einem 3er- oder 4er-Zahn beginnen, entstehen erfindungsgemäß Kammlinien der Grenzfläche zwischen Dentinmasse und Schneidemasse entlang der vestibulären beziehungsweise der lingualen Höcker der Zähne. Durch die virtuelle Überlagerung verschiedener bestehender Zahnlinien ergibt sich, dass die vestibuläre Kammlinie deutlich stärker gewellt ist als die linguale.

Die - stärker sichtbare - vestibuläre Dentinmassenseite ist insofern deutlich stärker strukturiert, was nicht nur für bei Betrachtung aus okklusaler Richtung gilt, sondern auch bei Betrachtung aus vestibulärer Richtung. Die erfindungsgemäße Wellung ist dort deutlich stärker ausgeprägt.

Weitere Vorteile, Einzelheiten und Merkmale ergeben sich aus der nachfolgenden Beschreibung verschiedener Ausführungsformen der Erfindung anhand der Zeichnung.

Es zeigen:
- Fig. 1: eine Übersicht über die Zahnlinien der vorliegenden Anmeldung, die für die Bereitstellung der virtuellen Formen der Grenzfläche per Überlagerung herangezogen wurden, wobei die linke Tabelle die Zähne 3 bis 6 und die rechte die Schneidezähne betrifft;
- Fig. 2 und 3: beispielhafte Darstellungen der Zähne aus Fig. 1, in der Abfolge 6 - 5 - 4 - 3 und 2 - 1;
- Fig. 4: Darstellungen von Zähnen 3 bis 6 in Okklusion, die bei der Aufstellung berücksichtigt wurden;
- Fig. 5 bis 8: modellhafte Darstellungen der Aufstelldaten nach "Übereinanderlegen", wobei der jeweils mesialste Zahn (Zahn 1) beim Ausrichten die höchste Priorität hatte;
- Fig. 9 bis 12: entsprechende Darstellungen für die Zähne 3 bis 6;
- Fig. 13 bis 16: ausgedruckte Aufstelldaten entsprechend den originalen Schichten, für Zähne 3 bis 7, je für Oberkiefer und Unterkiefer;
- Fig. 17: einen Zahnteilbogen mit einer konstruierten verbundenen Schichtung für Zähne 3 bis 7;
- Fig. 18 bis 22: Darstellungen von Zahnteilbögen für Oberkiefer- und Unterkieferzähne 1 und 2, mit ersten verbundenen Schichtungen (Fig. 22);
- Fig. 23 und 24: entsprechende Schichtverläufe der Zähne 1 und 2 beziehungsweise 3 bis 7, die jedoch gegenüber Fig. 13 bis 22 geglättet wurden, wobei die Interdentalräume homogener gestaltet wurden;
- Fig. 25 und 26: gegenüber Fig. 23 und Fig. 24 gespiegelte Zahnteilbögen;
- Fig. 27 und Fig. 28: eine Modifikation der Schichtverläufe gemäß der Fig. 23 und 24, unter Versatz des Schichtverlaufes und unter Hinzufügung zusätzlicher Farben;
- Fig. 29a bis 29f: Darstellungen von unterschiedlichen Dentinmassen-Grenzschichten in der Aufteilung zum einen 1-2 mit 3-7 beziehungsweise 1-3 mit 4-7;
- Fig. 30a und 30b: Darstellungen von Dentinmassen-Grenzschichten unter zusätzlicher Darstellung von horizontal verlaufenden Kurven mit Schwingungsbäuchen;
- Fig. 31a und 31b: Darstellungen von Dental-Fräsrohlingen in Scheibenform, wobei aus Fig. 31b bereits Schichtungsverläufe der Grenzschicht der Dentinmassen ersichtlich sind;
- Fig. 31c und 31d: weitere Anordnungsmöglichkeiten von Zahnteilbögen in Fräsrohlingen in Scheibenform;
- Fig. 32a bis 32c: weitere Anordnungsmöglichkeiten der Dentinmassen-Grenzfläche unter schematischer Darstellung der Schneidemassen-Hüllkurve;
- Fig. 33a bis 35: weitere Darstellungen den Dentinmassen-Grenzfläche zur Verwendung in einer beliebigen Außengeometrie;
- Fig. 36 und 37: Darstellungen zum Vergleich der Originalschichtung gemäß den bestehenden Zahnbibliotheken im Vergleich der Schichtung unter Verwendung der erfindungsgemäßen Zahnteilbögen;
- Fig. 38 und 39: eine leicht schematisierte Ansicht des Schichtungsverlaufs beim Herunterfräsen von Zahnteilbögen auf Einzelzähne, im Vergleich zu den originalen Einzelzähnen;
- Fig. 40: Ansicht eines Gebisses unter Verwendung von Zähnen, die aus Zahnteilbögen hergestellt sind und in Einzelzähne aufgeteilt sind, wobei eine Aufteilung der Zahnteilbögen 1-2 links 1-2 rechts 3-7 links sowie 3-7 rechts gemäß Fig. 41 vorgenommen wurde; (
- Fig. 42 und 43: Ansichten der Zahnaufstellung ähnlich zu Fig. 36 und 37, wobei eine "Best Fit"-Verschiebung bezogen auf Zahn 1 bzw. Zahn 3 vorgenommen ist;
- Fig. 44a bis 45b: schematische Ansichten von aus erfindungsgemäßen Zahnteilbögen gefertigten Zähnen, unter Darstellung der Grenzfläche zwischen Dentin- und Schneidemasse;
- Fig. 46A: eine schematische Ansicht eines Zahnteilbogens 1-2 unter Darstellung von 12 Schichten, deren Profil aus Fig. 47 ersichtlich ist;
- Fig. 46B: der Zahnteilbogen gemäß Fig. 46a in mesialer Ansicht, ebenfalls unter Darstellung der Schnitte 1 bis 12;
- Fig. 47 und 47A: Kurven der Schnitte 1 bis 12 aus Fig. 46B in einer bevorzugten Ausführungsform der Erfindung;
- Fig. 48 und 48A: eine weitere Ausführungsform eines erfindungsgemäßen Zahnteilbogens unter Darstellung von 12 Schnitten, entsprechend der Lage gemäß Fig. 46B;
- Fig. 49: eine schematische Darstellung der Differenz der Schnitte 1 bis 12 aus den Figuren 47 und 48;
- Fig. 50A: ein Zahnteilbogen für molare Zähne im Oberkiefer in perspektivischer Darstellung, unter Darstellung von 12 Schnitten und deren Lage;
- Fig. 50B: der Zahnteilbogen gemäß Fig. 50A in mesialer Ansicht;
- Fig. 51, 51A, 51B, 51C und 51D: Kurven der Schnitte 1 bis 12 aus Fig. 50B, entsprechend der Lage gemäß Fig. 50B;
- Fig. 52, 52A, 52B, 52C und 52D: eine weitere Ausführungsform eines erfindungsgemäßen Zahnteilbogens unter Darstellung von 12 Schnitten, entsprechend der Lage gemäß Fig. 50B;
- Fig. 53, 53A, 53B, 53C und 53D: eine weitere Ausführungsform eines erfindungsgemäßen Zahnteilbogens unter Darstellung von 12 Schnitten entsprechend der Lage gemäß Fig. 50B;
- Fig. 54: ein Vergleich der Schnitte aus Fig. 51 und Fig. 52;
- Fig. 55: ein Vergleich der Schnitte aus Fig. 51 und Fig. 53;
- Fig. 56A: eine Ausführungsform der Erfindung in einer Darstellung gemäß Fig. 50A unter Darstellung eines Zahnteilbogens für die Zähne 3, 4, 5, 6 und 7 im Oberkiefer;
- Fig. 56B: eine Ansicht des Zahnteilbogens in der Ausführungsform gemäß Fig. 56A, aus mesialer Sicht;
- Fig. 57, 57A, 57B, 57C und 57D: eine weitere Ausführungsform eines erfindungsgemäßen Zahnteilbogens unter Darstellung von 12 Schnitten, entsprechend der Lage gemäß Fig. 56B;
- Fig. 58, 58A, 58B, 58C und 58D: eine weitere Ausführungsform eines erfindungsgemäßen Zahnteilbogens unter Darstellung von 12 Schnitten, entsprechend der Lage gemäß Fig.56B;
- Fig. 59 , 59A, 59B, 59C und 59D: eine weitere Ausführungsform eines erfindungsgemäßen Zahnteilbogens unter Darstellung von 12 Schnitten entsprechend der Lage gemäß Fig. 56B;
- Fig. 60: ein Vergleich der Schnitte aus Fig. 57 und Fig. 58;
- Fig. 61: ein Vergleich der Schnitte aus Fig. 57 und Fig. 59;
- Fig. 62A: eine Ausführungsform der Erfindung in einer Darstellung gemäß Fig. 50A unter Darstellung eines Zahnteilbogens für die Zähne 4, 5, 6 und 7 im Unterkiefer;
- Fig. 62B: eine Ansicht des Zahnteilbogens in der Ausführungsform gemäß Fig. 62A, aus mesialer Sicht;
- Fig. 63 und 63A: Kurven der Schnitte 1 bis 12 aus Fig. 62B, entsprechend der Lage gemäß Fig. 62B;
- Fig. 64: eine weitere Ausführungsform eines erfindungsgemäßen Zahnteilbogens unter Darstellung von 12 Schnitten, entsprechend der Lage gemäß Fig. 62B;
- Fig. 65: ein Vergleich der Schnitte aus Fig. 63 und Fig. 64;
- Fig. 66A: eine Ausführungsform der Erfindung in einer Darstellung gemäß Fig. 50A unter Darstellung eines Zahnteilbogens für die Zähne 3, 4, 5, 6 und 7 im Unterkiefer;
- Fig. 66B: eine Ansicht des Zahnteilbogens in der Ausführungsform gemäß Fig. 66A, aus mesialer Sicht;
- Fig. 67 und 67A: Kurven der Schnitte 1 bis 12 aus Fig. 66B, entsprechend der Lage gemäß Fig. 66B;
- Fig. 68: eine weitere Ausführungsform eines erfindungsgemäßen Zahnteilbogens unter Darstellung von 12 Schnitten, entsprechend der Lage gemäß Fig. 66B;
- Fig. 69: eine weitere Ausführungsform eines erfindungsgemäßen Zahnteilbogens unter Darstellung von 12 Schnitten, entsprechend der Lage gemäß Fig. 66B;
- Fig. 70: ein Vergleich der Schnitte aus Fig. 67 und Fig. 68; und
- Fig. 71: ein Vergleich der Schnitte aus Fig. 67 und Fig. 69.

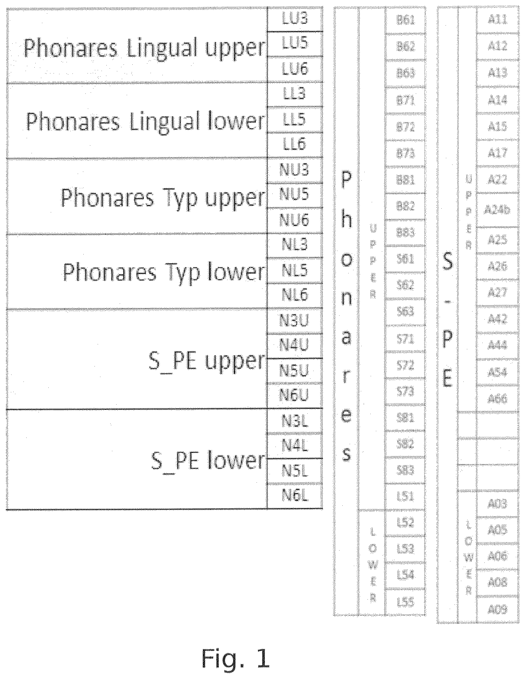

Aus der Übersicht gemäß Fig. 1 sind die Zahntypen ersichtlich, die in einer Ausführungsform der Erfindung für die Herstellung der überlagerten Zahnteilbögen verwendet wurden.

Dem Grunde nach wurden die Zahnlinien SR Phonares und S-PE verwendet, und zwar in mehreren Typen. Zum einen wurde Phonares lingual und zum anderen Phonares Typ verwendet. Der dort an zweiter Stelle angegebene Buchstabe U bedeutet, dass der betreffende Zahnsatz für den Oberkiefer vorgesehen ist, und der entsprechende Buchstabe L, dass der Zahnsatz für den Unterkiefer vorgesehen ist.

"3", "5" und "6" betrifft die Größe des Zahns.

Die Bedeutung der Buchstaben L und U sowie der Ziffern 3, 4, 5 und 6 gilt analog auch für die beiden weiteren Zahnlinien "Phonares Typ" und "S-PE".

Während der linke Teil der Tabelle aus Fig. 1 Molare und Prämolare betrifft (Zähne 3, 4, 5, 6 und 7) betrifft der rechte Teil Schneidezähne, wobei auch hier unterschiedliche Zahnformen von Phonares B61 bis S-PE A09, getrennt nach Oberkieferzähnen und Unterkieferzähnen, aus der vorliegenden Zahnbibliothek ausgesucht wurden und für die Erstellung von Zahnteilformen aus der Überlagerung bereitgestellt wurden.

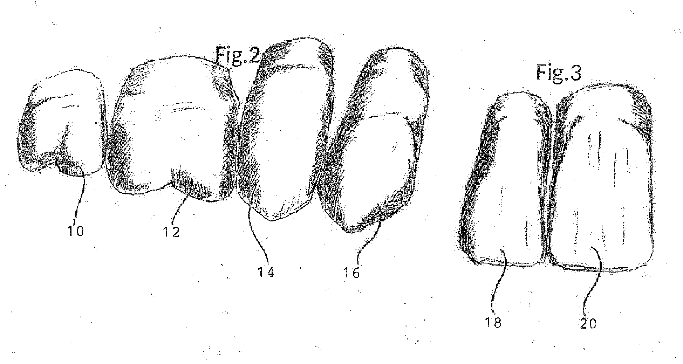

Beispielhaft sind in Fig. 2 Molare und Prämolare in vestibulärer Sicht dargestellt, mit den Molaren 10 und 12 (Zahnposition 7 und 6) und weiter mit den Prämolaren 14 und 16, entsprechend der Zahnposition 5 und 4.

In analoger Weise sind in Fig. 3 Schneidezähne 18 und 20 dargestellt, die je den Positionen 2 und 1 entsprechen.

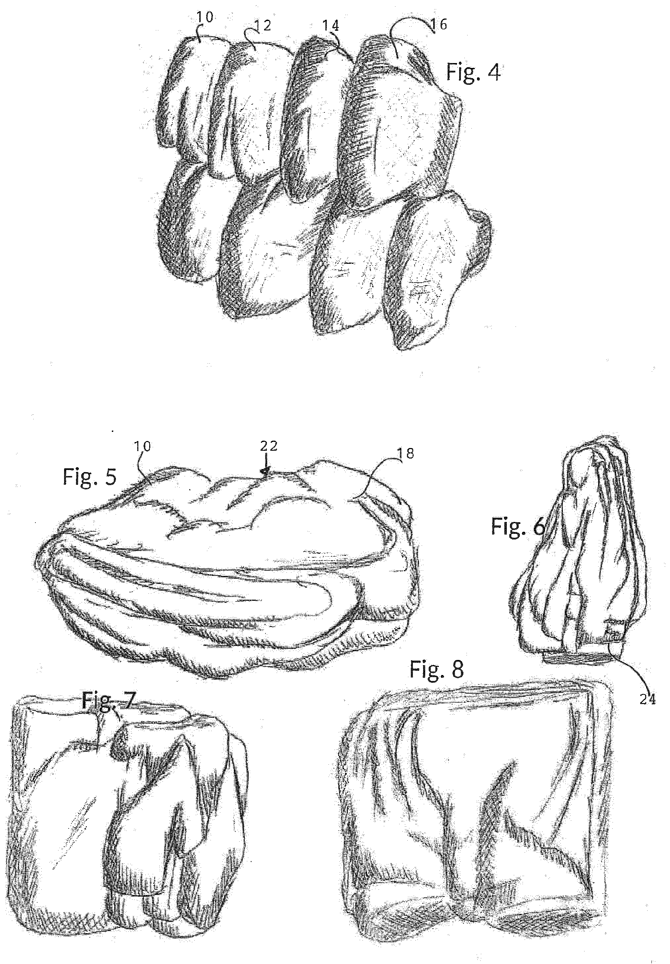

Zu diesen Oberkiefer-Zähnen werden aus der Zahnbibliothek die passende UnterkieferZähne ausgewählt, und gemäß Fig. 4 wird eine funktionale Aufstellung vorgenommen, wobei in Fig. 4 die einander gegenüberliegenden Zähne in Okklusion dargestellt sind.

Eine entsprechende Funktionsaufstellung wird auch für die Schneidezähne 1 und 2 vorgenommen.

Im nächsten Herstellschritt werden nun die Formen der Zähne einander überlagert. Dies sei hier an Hand der Fig. 5 bis 8 für die Zähne 1 und 2 erläutert.

Aus Fig. 5 ist dem Grunde nach ersichtlich, in welcher Weise Zahnformen verschiedener Zahnlinien für die Zähne 1 und 2 einander überlagert wurden.

Aus Fig. 5 ist lediglich die Außenform der so gebildeten Roh-Zahnteilrohbogens ersichtlich, aber es versteht sich, dass entsprechendes auch für die Grenzfläche

Dentin-/Schneidemasse gilt, von der ebenfalls Überlagerungen erzeugt werden und insbesondere von 10 Prozent auf 3 Prozent.

Dem in Fig. 5 links dargestellten Zahn 10 kommt nun beim Ausrichten die höhere Priorität zu. Er stellt den Primärpositions-Zahnbereich dar. Es ist ersichtlich, dass auf lingualer Seite zwischen den Zähnen 10 und 18 eine Konkavität 22 vorgesehen ist, die im Grunde einen Zahnzwischenraum andeutet.

Fig. 6, Fig. 7 und Fig. 8 zeigen den Roh-Teilzahnbogen 24 in mesialer Sicht (Fig. 6), in vestibulärer Sicht (Fig. 7) sowie in lingualer Sicht (Fig. 8).

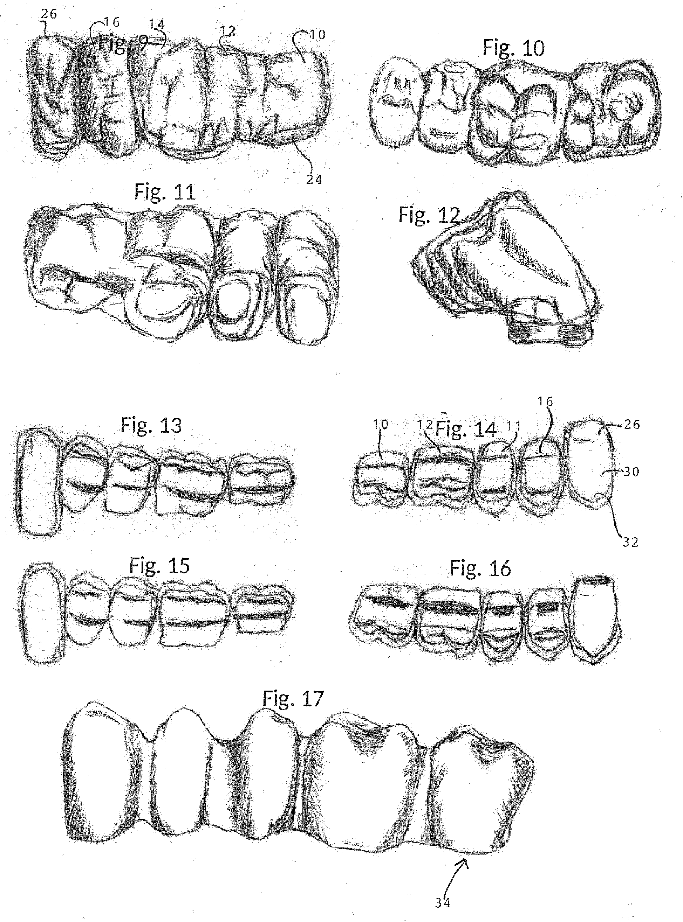

Ein entsprechender Roh-Zahnteilbogen 24 für die Molaren ist aus den Fig. 9 bis 12 ersichtlich. Hier liegt wiederum bei Fig. 9 die vestibuläre Ansicht vor, bei Fig. 10 die okklusale, bei Fig. 11 die linguale und bei Fig. 12 die mesiale Ansicht des Roh-Zahnteilbogens 24. Hier wird dem Zahn 26 mit der Zahnposition 3 die höchste Priorität zugemessen. Er stellt hier den Primärpositions-Zahnbereich dar.

Es ist ersichtlich, dass der Zahn 26 gegenüber dem Zahn 16 eine deutliche Abgrenzung erfährt, basierend auf der genannten Überlagerung, die für unterschiedliche Größen und Zahnformen bei dem Zahn 26 beginnt, während die Zahnzwischenräume bei den folgenden Zähnen 14, 12 und 10 immer stärker verschwimmen und beispielsweise zwischen den Zähnen 12 und 10 nur noch andeutungsweise zu erkennen sind.

Wie ersichtlich ist, stehen durch die Überlagerungen zahlreiche Einbuchtungen und Ausbuchtungen, die im Grunde als Basis für einen universell einsetzbaren Zahnteilbogen wenig geeignet sind.

Dies gilt im besonderen Maße für die Schneidemasse, während derartige Unregelmäßigkeiten bei der Dentinmasse weniger ins Gewicht fallen.

Die sowohl hinsichtlich der Schneidezähne als auch hinsichtlich der Molaren gewonnenen Aufstelldaten werden nun weiterverwendet. Dies ist schematisch in den Fig. 13 bis 17 dargestellt. Anhand des Zahnes 26 ist ersichtlich, dass dort die Dentinmasse 30 eine im Grunde originale Zahnform wiedergibt, und auf dieser Schneidemasse 32 mit einer Schichtstärke aufgebracht ist, die zum inzisalen Bereich hin etwas zunimmt aber im wesentlichen gleichförmig ist. Die Dentimasse, und insofern auch deren Grenzfläche zur Schneidemasse kann basierend auf einer mathematischen Reduktion der verblockten Zahnaußengeometrie erzeugt werden.

Basierend auf einer im wesentlichen gleichen Schichtstärken wird nun in der Schneidemasse gemäß Fig. 17 eine verbundene Schichtung konstruiert. Diese lässt die Zahnzwischenräume 34 deutlich erkennen. Dort tritt dann auch die Dentinmasse ggf. hervor

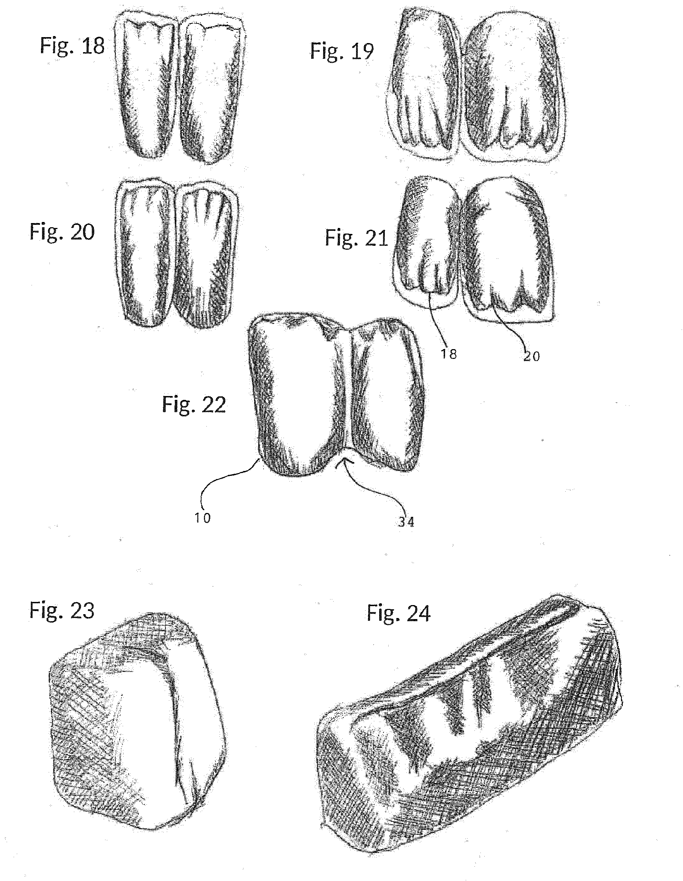

Nach dem gleichen System ist die Schichtung für die Schneidezähne vorgesehen, wie es aus den Fig. 18 bis 22 ersichtlich ist, wobei auch hier ein Übergang zwischen den Zähnen 18 und 20 über die erfindungsgemäße Wellung geschaffen wird, und insofern eine Verblockung erzielt wird.

Ein derart verblockter Zahnteilbogen ist besonders gut als Fräsrohling geeignet,

Es versteht sich, dass die hier dargestellten Schritte sich sämtlich auf die Entwurfphase beziehen, also insofern eine virtuelle Schneidemasse usw. vorliegt.

Die vorliegenden Ergebnisse gemäß den Fig. 17 und 22 werden dann inzisal bzw. okklusal sowie labial bzw. bukkal geglättet. Ferner wird der Übergang entsprechend den Zahnzwischenräumen 34 als Wellental gestaltet, so dass insgesamt zumindest im inzisalnahen bzw. okklusal-nahen Bereich des Zahnteilbogens aus okklusaler Richtung betrachtet eine bukkale Wellenform oder Wellung vorliegt. Dies gilt in besonderem Maße für den vestibulären Zahnkamm, während die Wellung des lingualen Zahnkamms deutlich geringer ausgeprägt ist.

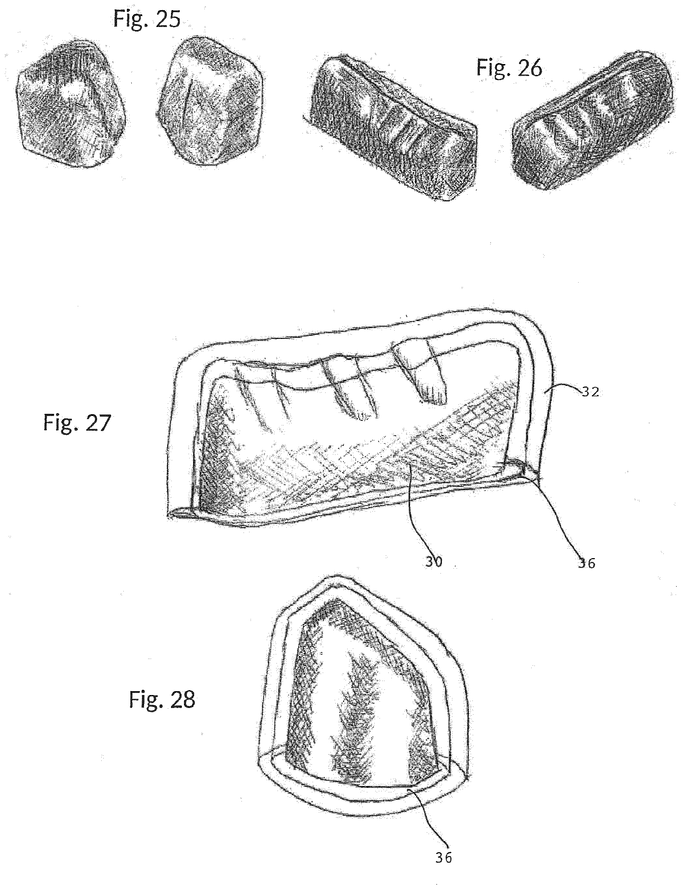

Die so erhaltenen Ergebnisse gemäß den Fig. 23 und 24 werden nun gemäß den Fig. 25 und 26 für die je andere Hälfte der Prothese gespiegelt, wie es aus den Fig. 25 und 26 ersichtlich ist.

Gemäß Fig. 27 und 28 wird der Schichtverlauf zusätzlich abgesetzt. Zwischen dem transluzenten Schneidemassenmaterials 32 und dem opaken Dentinmassenmaterial 30 wird eine zusätzliche Übergangsmasse 36 eingesetzt, und es erfolgt insofern eine Verkleinerung der Dentinmassengrenzschicht zwischen der Dentinmasse 30 und der Übergangsmasse 36, mindestens bezogen auf die ursprünglich konstruierten Roh-Zahnteilbögen .

Wie aus den Fig. 27 und 28 ersichtlich ist, erfolgt zudem eine gewisseVergleichmäßigung der Schichtdicke der Schneidemasse 32.

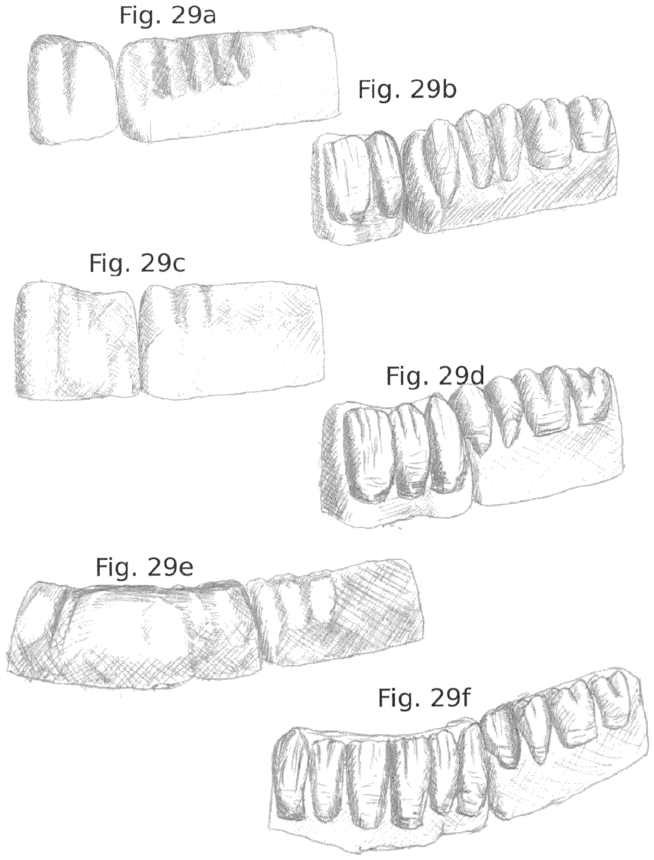

Alternativ zu der hier dargestellten Teilung 12-34567, wie sie auch in den Fig. 29a und 29b zum Ausdruck kommt, ist es auch möglich eine andere Teilung vorzunehmen. Gemäß Fig. 29c ist dies die Teilung 123-4567 und gemäß Fig. 29e die Teilung 321123-4567.

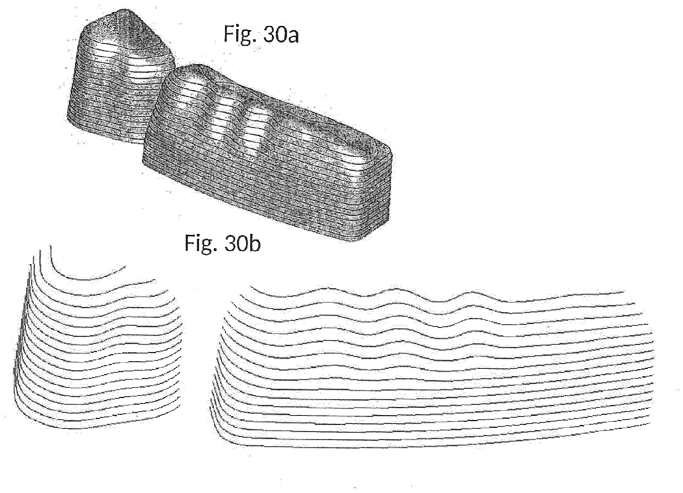

Für die rechnerische Aufbereitung erfolgt eine Schichterfassung der jeweils bestehenden Horizontalprofile, wie es aus den Fig. 30a und 30b ersichtlich ist.

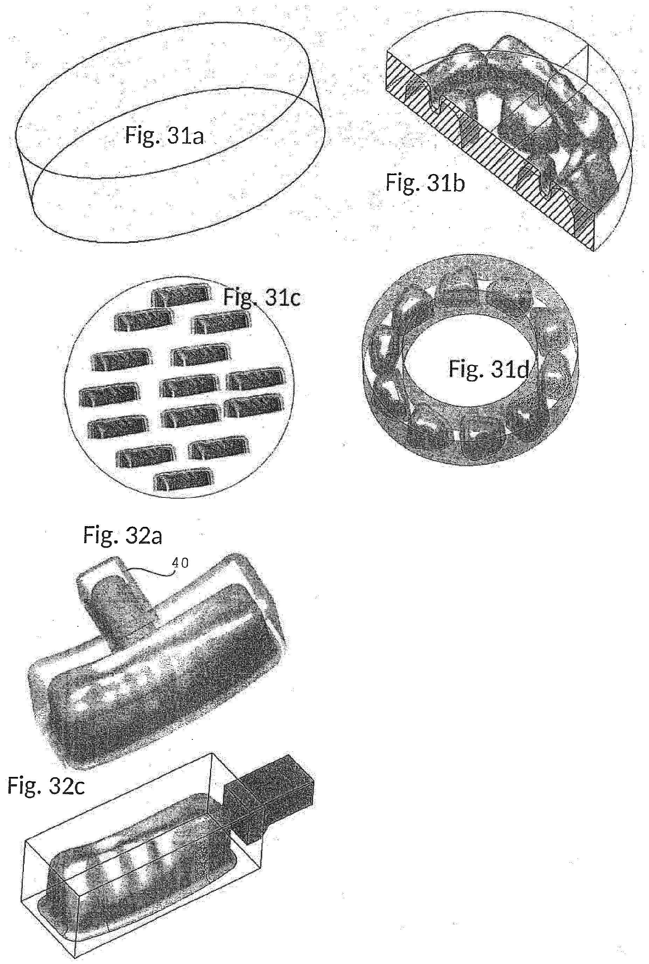

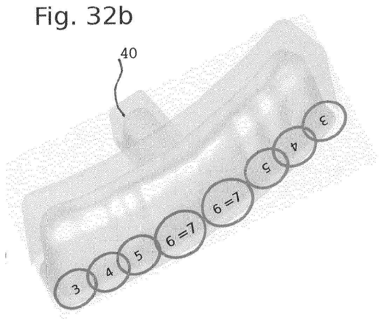

Gemäß den Fig. 31 und 32 sind verschiedene Herstellungsmöglichkeiten für erfindungsgemäße Zahnteilbögen ersichtlich. Zunächst kann ein handelsüblicher Rohling gemäß Fig. 31a verwendet werden, der eine Scheibenform aufweist, und einen Durchmesser von knapp 100mm hat. In diesem lassen sich gemäß den Fig. 31b und 31c Zahnteilbögen in beliebiger Weise mehrfach unterbringen. Der Rohling kann aus Dentalkunststoff, Composite oder aus Keramik bestehen.

Gemäß Fig. 31d ist eine Ringform eines Rohlings dargestellt, die sich besonders für die Aufnahme von Zahnteilbögen 1-2 eignet.

Es ist auch möglich, einen Haltezapfen 40 mit den Fig. 32a und 32b, oder aber gemäß der Fig. 32c zu realisieren, der als Basis für die Lagerung beim Fräsen dient.

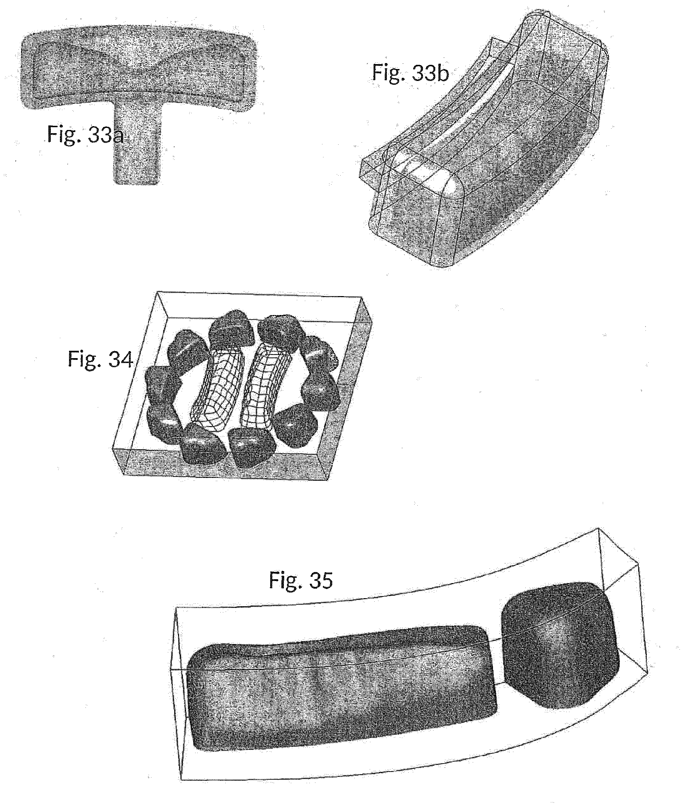

Die Fig. 33a und 33b, 34 und 35 zeigen unterschiedliche Arten der Unterbringung von Zahnteilbögen in verschiedenen Rohlingen.

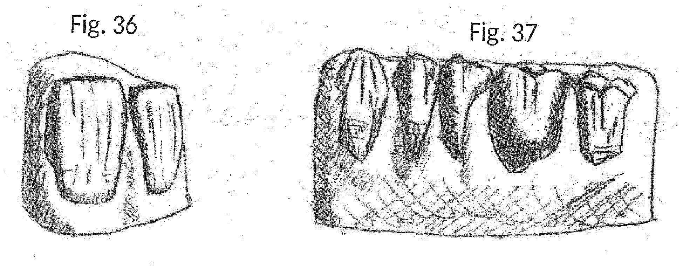

Bei der Aufstellung wird nun gemäß den Fig. 36 und 37 die Positionierung nach Fertigstellung so realisiert, dass die Schichtung der Zielschichtung möglichst nahe kommt. Für die Positionierung wird jeweils der am mesialsten angeordnete Zahn als Basis verwendet.

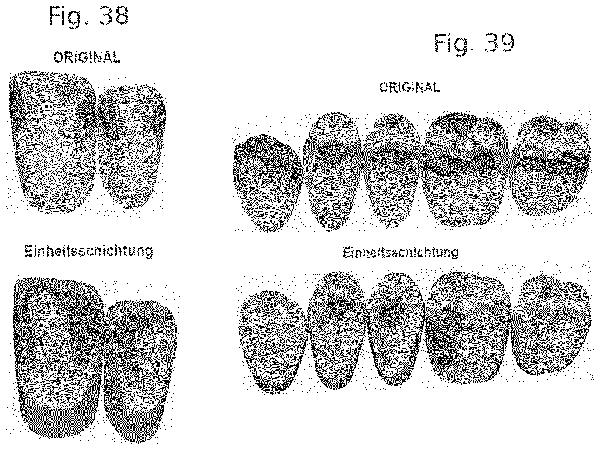

Der per Einheitsschichtung erstellte Zahnteilbogen wird nun in an sich bekannter Weise gefräst, so dass die Schichtung dem Original möglichst nahe kommt. Dies ist aus den Fig. 38 und 39 ersichtlich.

Es ist auch möglich, den "Best-Fit" der ausgewählten Zahnteilverblockung durch Software, z.B. ähnlich dem Kleine Fehlerquadrate- erfahren, zu realisieren. Dabei muss natürlich die Primärzahnposition mit einer höheren Gewichtung als die Sekundärzahnposition und weitere Positionen versehen werden.

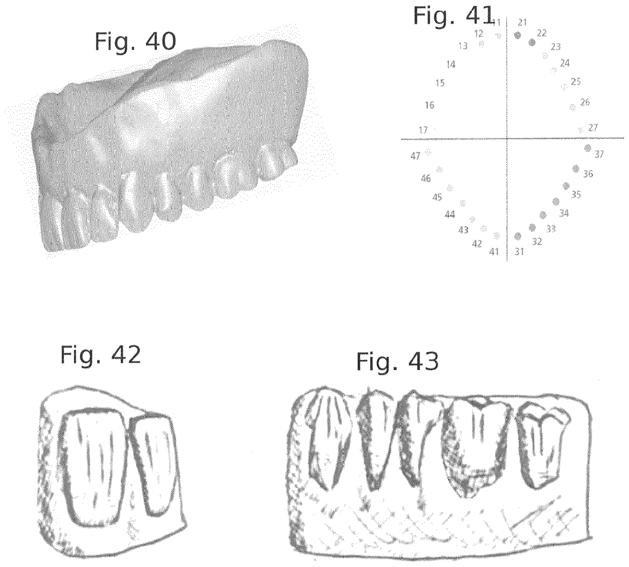

Eine entsprechend hergestellte Prothese bereits mit Zahnbestückung ist aus Fig. 40 ersichtlich. Es ist ersichtlich, dass im Übergangsbereich zwischen den Zahnzwischenräumen Zahnmaterial verbleibt, hier Dentinmaterial. Dies ist typischerweise dunkler als Schneidemassenmaterial, so dass die ästhetische Wirkung der von Einzelzähnen nahekommt.

Gemäß Fig. 41 ist eine Splittung beliebig möglich. Hier sind die Zähne 12 und 11 einerseits und 13 bis 17 bzw 23 bis 27 andererseits je in einer Zahnteilform zusammengefasst.

Entsprechendes gilt für die Unterkieferzähne.

Bei der Zahnaufstellung wird zudem auch hinsichtlich der Okklusion auf ein "Best Fit" geachtet. Dies erfolgt virtuell, also vor dem tatsächlichen Herausfräsen. Dies soll mit den Fig. 42 und 43 angedeutet werden. Die Okklusion entspricht insofern der in Fig. 4 dar

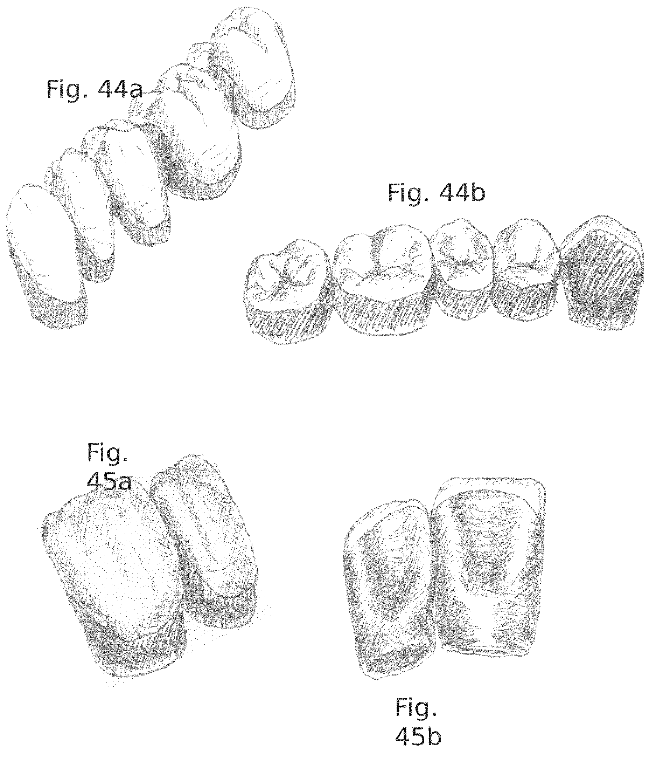

Die erfindungsgemäßen Zähne haben einen vergleichsweise hohen Schneidemassenanteil von 15 bis 35 Prozent, so dass 75 Prozent Dentin verbleiben, Zweischichtigkeit des Aufbaus vorausgesetzt. Bei drei- und mehrschichtigem Aufbau istz der Dentinanteil entsprechend geringer. Dies ist schematisch aus den Fig. 44a bis 45b ersichtlich.

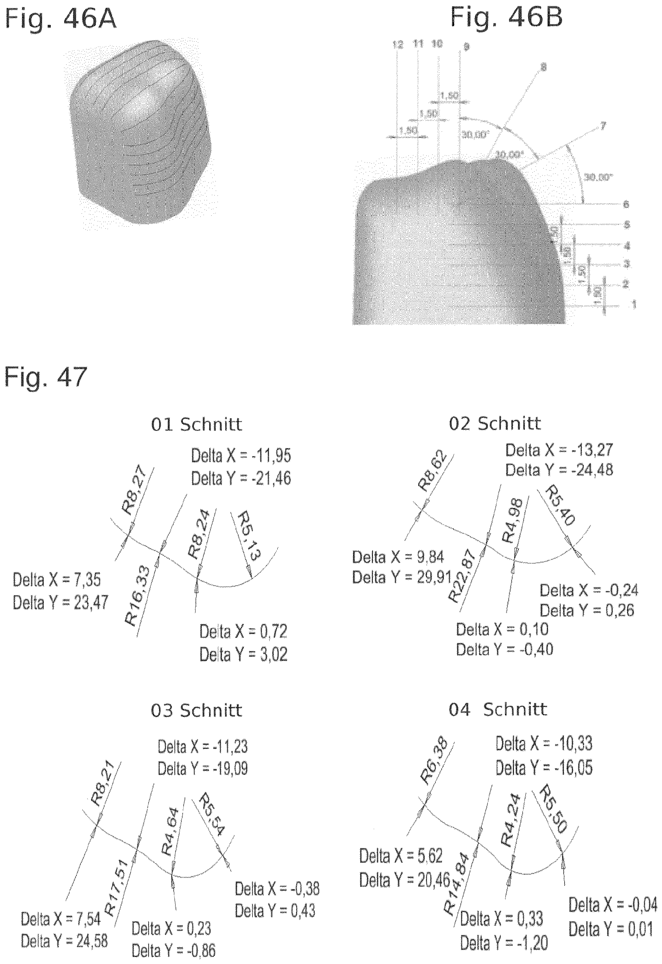

Die mathematische Auslegung von Zahnteilbögen ist im folgenden anhand der Fig. 46a bis 61 beschrieben.

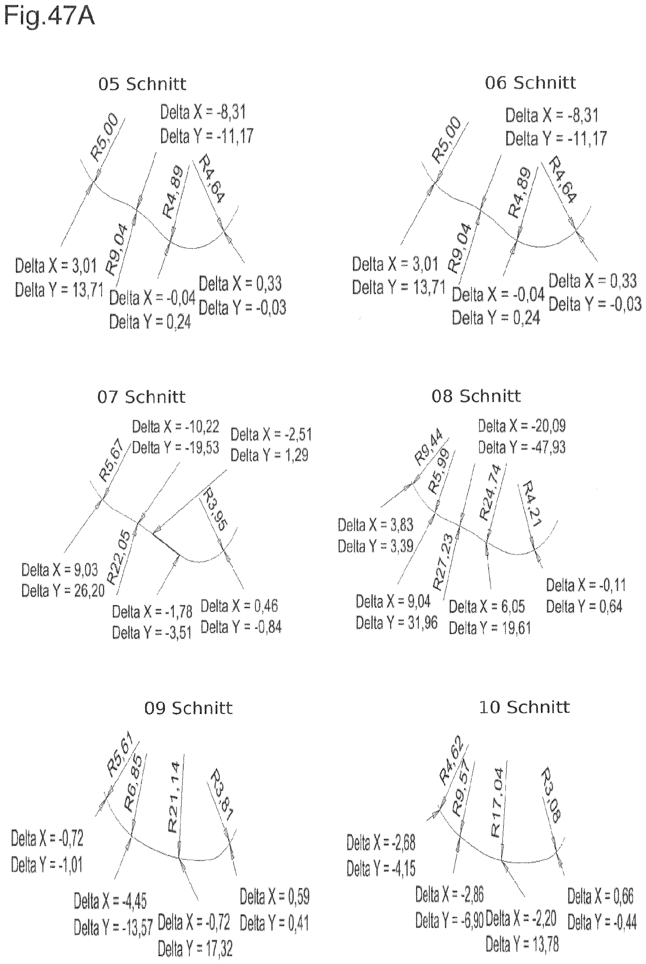

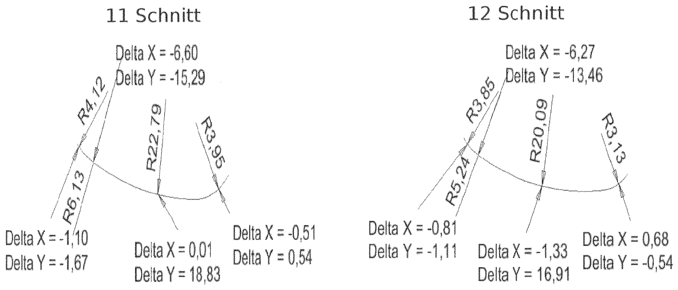

Fig. 46A zeigt einen Zahnteilbogen für die Zähne 1 und 2. Die Schichtlagen, wie sie in Fig. 47 beschrieben sind, sind aus Fig. 46b ersichtlich. Für Frontzähne sind die Schichtlagen im Oberkiefer und im Unterkiefer gleich.

Beispielhaft sei hier der Schnitt 01 aus Fig. 47 erläutert: Die Schnittlinie läßt sich als Aneinanderreihung von Kreisbögen definieren, die insgesamt die erfindungsgemäße Wellung - betrachtet im wesentlichen in einer okklusionsparallelen Ebene, soweit die Schnittlinien 01 bis 06 betroffen sind - ergeben:
Der Kreismittelpunkt eines Kreisbogens, der hier als der vierte Kreisbogen bezeichnet wird, mit dem Radius R8,27 - ausgedrückt in mm - stellt den Erstursprung dar. Dieser liegt oberhalb der Schnittlinie, die hier als Kurve bezeichnet wird.. Diesem Punkt sind in der Zeichnung die Werte Delta X = 7,35 und Delta Y = 23,47 zugeordnet. Der nächste Kreisbogen-Mittelpunkt, der des dritten Kreisbogens, ist um 7,35 mm nach links und um 23,47 mm nach unten gegenüber dem Erstursprung verlagert. Der Wendepunkt der Kurve ist der Schnittpunkt der Kurve mit der Verbindungsgerade zwischen diesen beiden Kreisbogen-Mittelpunkten.

Dieser dritte Kreisbogen hat einen Radius von 16,33 mm, was in Fig. 47 als R16,33 eingetragen ist. Er liegt ersichtlich unterhalb der Kurve.

Mit den Delta X- und Delta Y-Werten von -11,95 und -21,46 ist der zweite Kreisbogenmittelpunkt um entsprechende mm-Werte nach oben und rechts verlagert, bezogen auf den dritten Kreisbogenmittelpunkt.

Der zweite Kreisbogen hat einen Radius von R8,24, also 8,24 mm, und liegt oberhalb der Kurve.

Der Mittelpunkt des ersten Kreisbogens ist gegenüber dem zweiten Kreisbogenmittelpunkt um 0,72mm in X-Richtung, also nach links, und um 3,02 mm in Y-Richtung, also nach unten, verlagert, entsprechend der Delta-Werten X = +0,72 und Y= +3,02. Er kommt ebenfalls oberhalb der Kurve zu liegen.

Der 1. Kreisbogen hat, wie ersichtlich ist, einen Radius von 5,13 mm, entsprechend R5,13.

Der 1. Kreisbogen beginnt insofern auf der rechten Seite in Fig. 47 (Radius 5.13 und x=y=z = 0). Der 2. Kreisbogen hat einen Radius von 8.24 und ist um x = 0.72 und y = 3.02 zu diesem versetzt. Der 3. Kreisbogen mit Radius 16.33 ist zum 2. Radiusmittelpunkt um -11.94 bzw. -21.46 versetzt usw. Der erste Kreisbogen des darüber liegenden 2. Schnittes ist um x, y, z (im konkreten Fall -0.24 bzw. 0.26 (sowie z = 1.50) zu diesem versetzt. Die folgenden Kreisbögen des Schnittes beziehen sich wieder auf den jeweils letzten Mittelpunkt und haben dabei keine Verlagerung aus der Zeichnungsebene heraus und insofern ein z von 0.

Der 1. und der 2. Kreisbogen bilden zugleich den Primärpositions-Zahnbereich ab, während der 4. Kreisbogen den Sekundärpostions-Zahnbereich umgibt, und der 3. Kreisbogen der dazwischenliegenden Einschnürung - insofern dem späteren Zahnzwischenraum - entspricht.

Nach diesem Schema sind auch die folgenden 11 Schnittlinien, und auch diejenigen der weiteren Ausführungsformen, bemaßt, und die Maße sind je in die Zeichnungen eingetragen.

Die Schnittlinien 07 und 08 zeigen je Kurvenverläufe des Dentinmassen-Fräsrohlings schräg über den vestibulären Dentinmassenkamm betrachtet, in unterschiedlichen Winkeln, wie es aus Fig. 46B ersichtlich ist, und die Schnittlinien 09 bis 12 zeigen je Kurvenverläufe in einer zu der mesial-distalen Ausrichtung der Schneidezähne parallelen Ebene.

Die aus Fig. 47 und 47A ersichtlichen Schnitte 1 bis 12 zeigen einen vergleichsweise stark strukturierten Zahnteilbogen, mit einer dementsprechend stärker ausgeprägten Wellung, die als ideal Wellung angesehen werden kann.

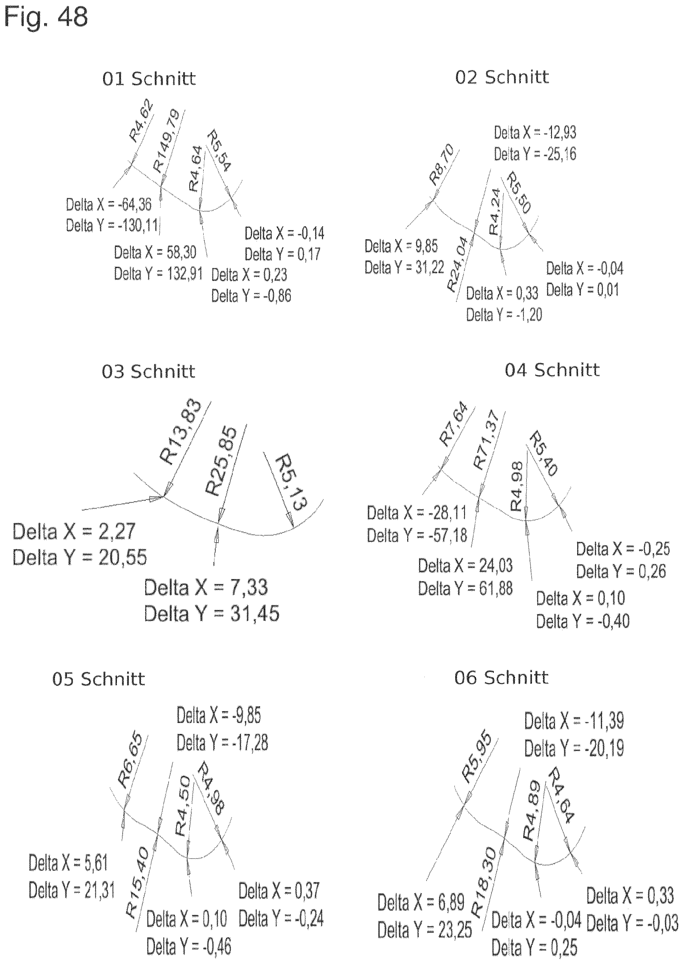

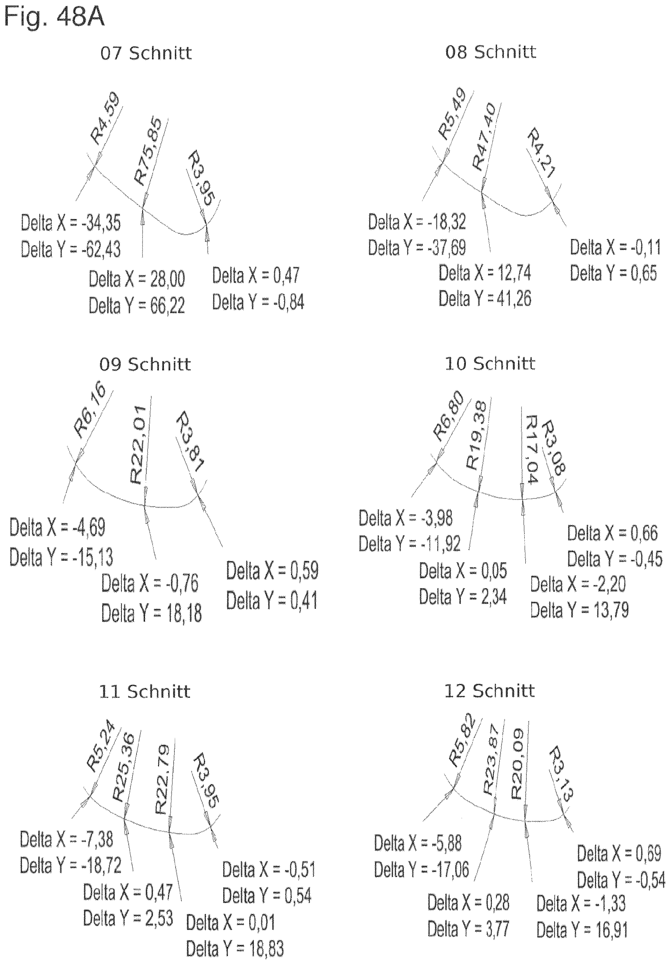

Die aus Fig. 48 und 48A ersichtlichen Schnitte 1 bis 12 zeigen einen vergleichsweise weniger stark strukturierten Zahnteilbogen, mit einer dementsprechend schwächer ausgeprägten Wellung, der insofern als Fräsrohling verwendbar ist. Diese Lösung ist einfacher herzustellen und liefert für den Primärpositionszahnbereich ein - nahezu - gleich gutes Ergebnis, jedoch für den nächsten Zahn ein ästhetisch etwas schlechteres Ergebnis.

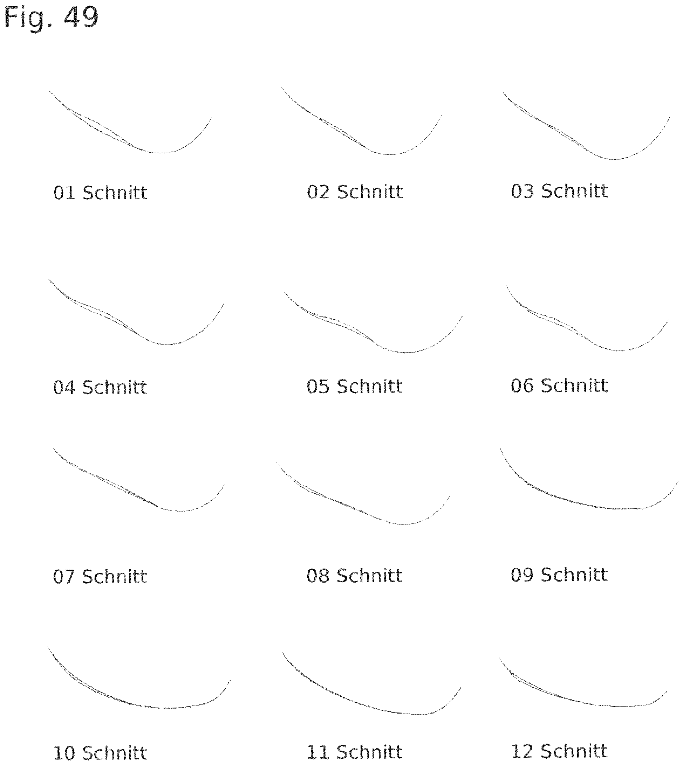

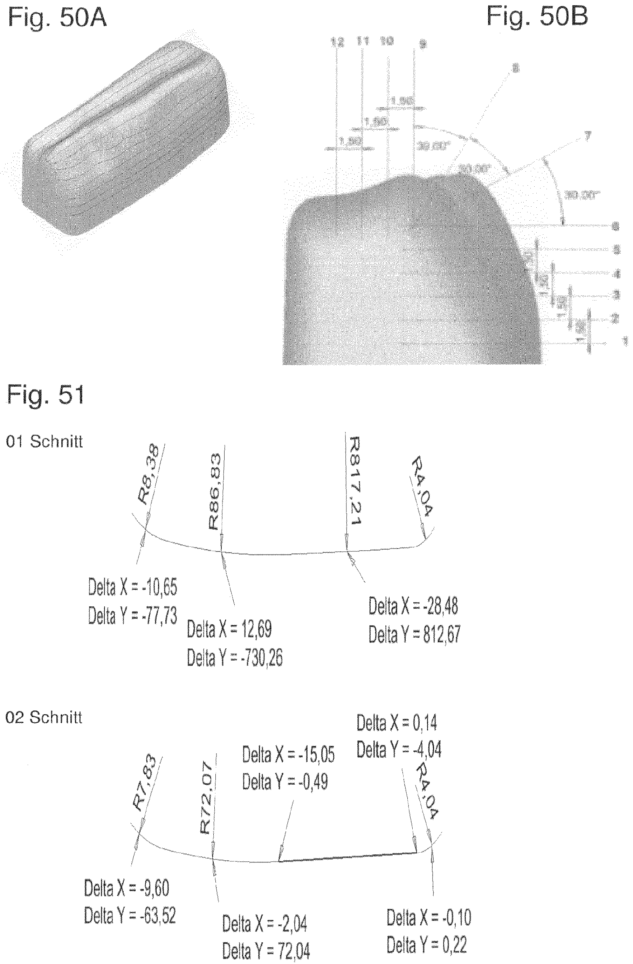

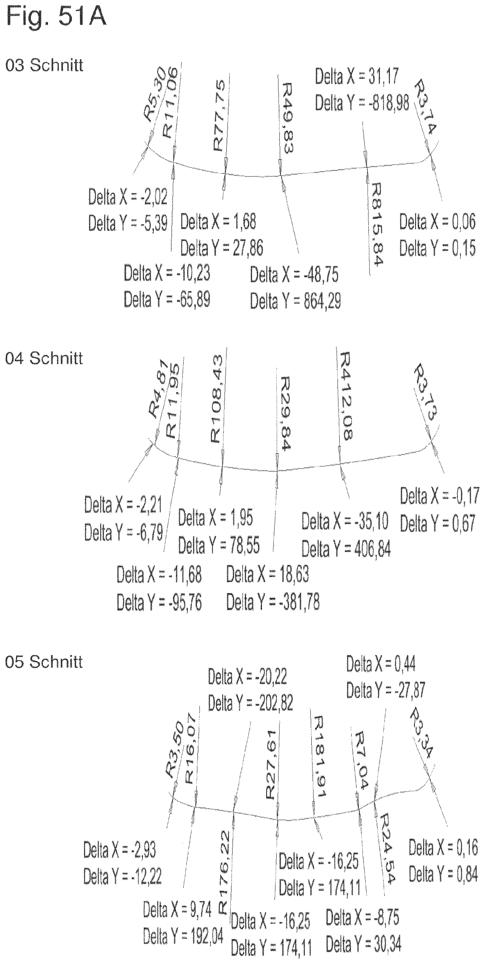

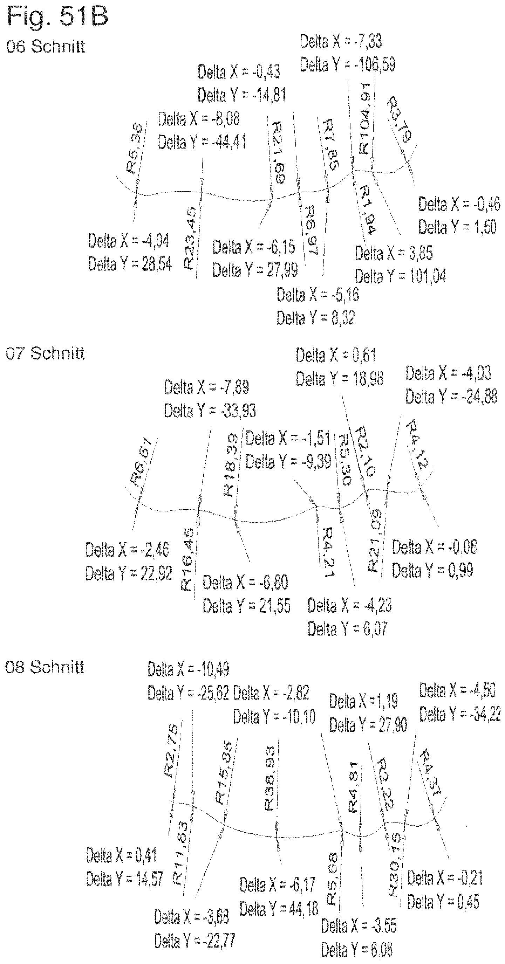

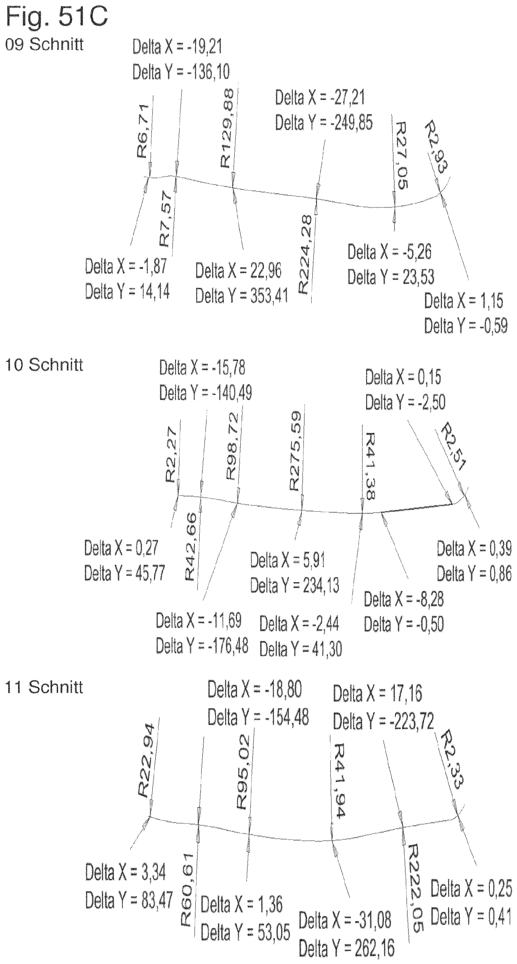

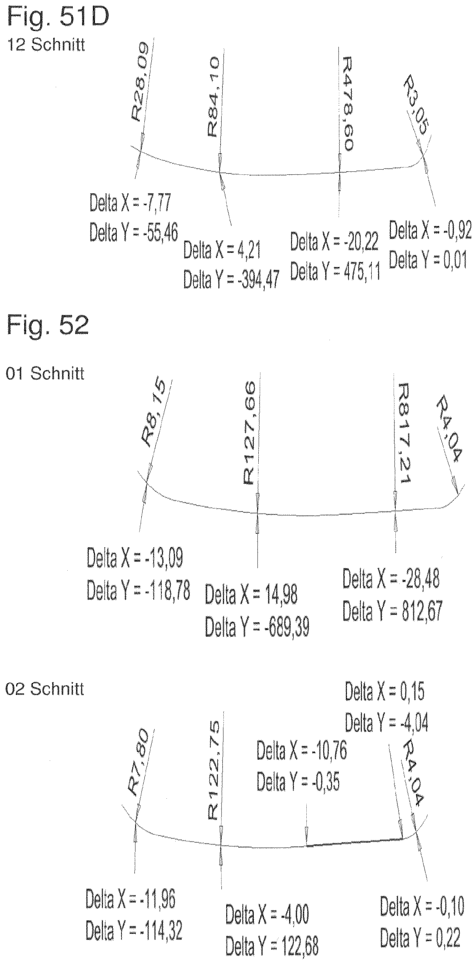

Zur Verdeutlichung sind die Kurven der Schnitte aus den Figuren 47 und 48 in Fig. 49 übereinanderliegend eingetragen
Entsprechendes gilt für Fig. 50A ff für einen Molar-Zahnteilbogen mit den Zähnen 4-5-6-7
Fig. 50A zeigt einen Zahnteilbogen für die Zähne 4 bis 7 im Oberkiefer. Die Schichtlagen, wie sie in Fig. 51 beschrieben sind, sind aus Fig. 50B ersichtlich.

Die aus Fig. 51 bis 51D ersichtlichen Schnitte 1 bis 12 zeigen einen vergleichsweise stark strukturierten Zahnteilbogen, mit einer dementsprechend stärker ausgeprägten Wellung.

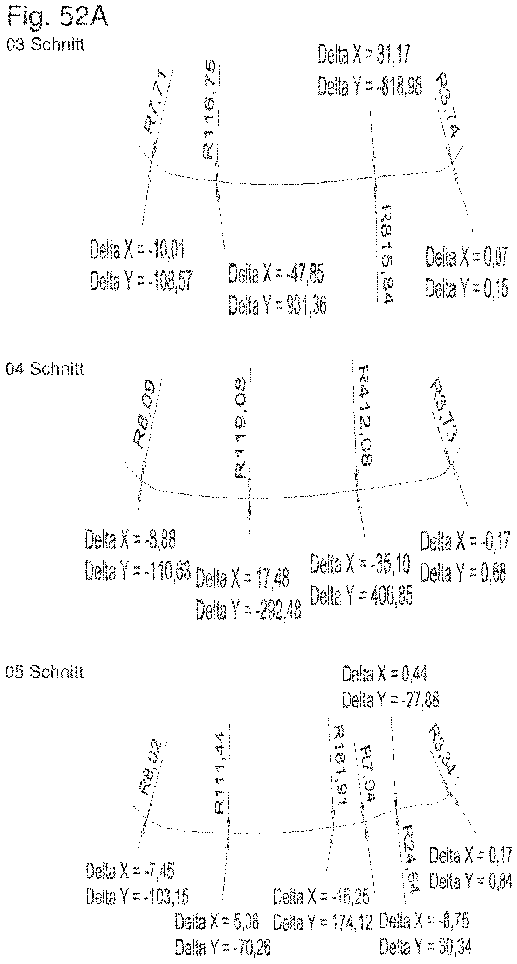

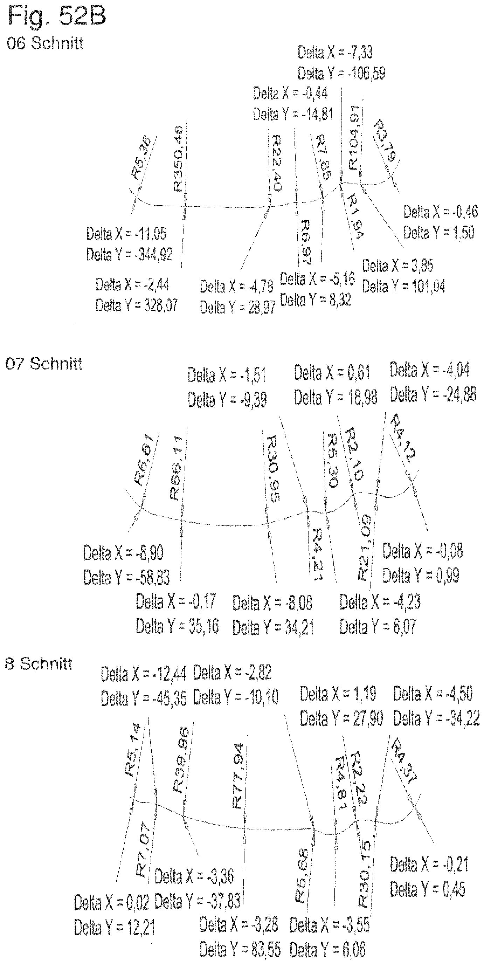

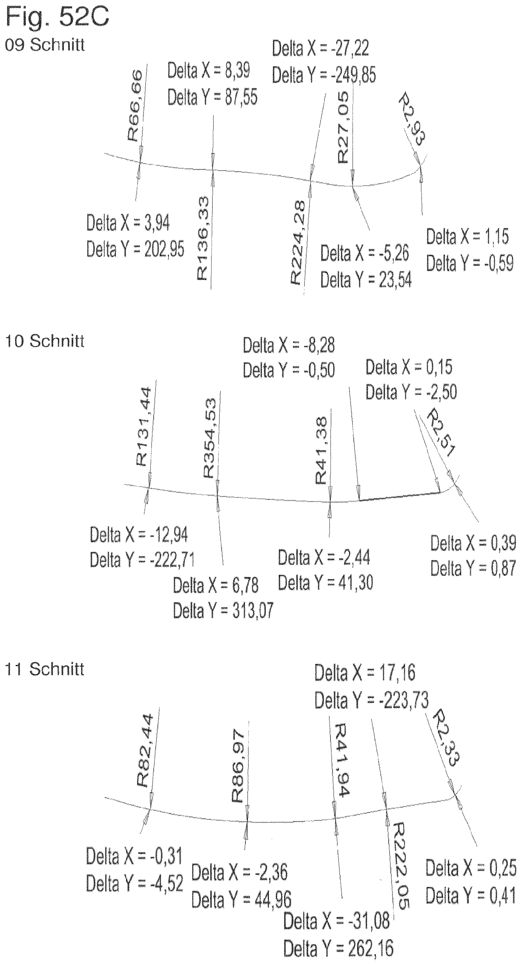

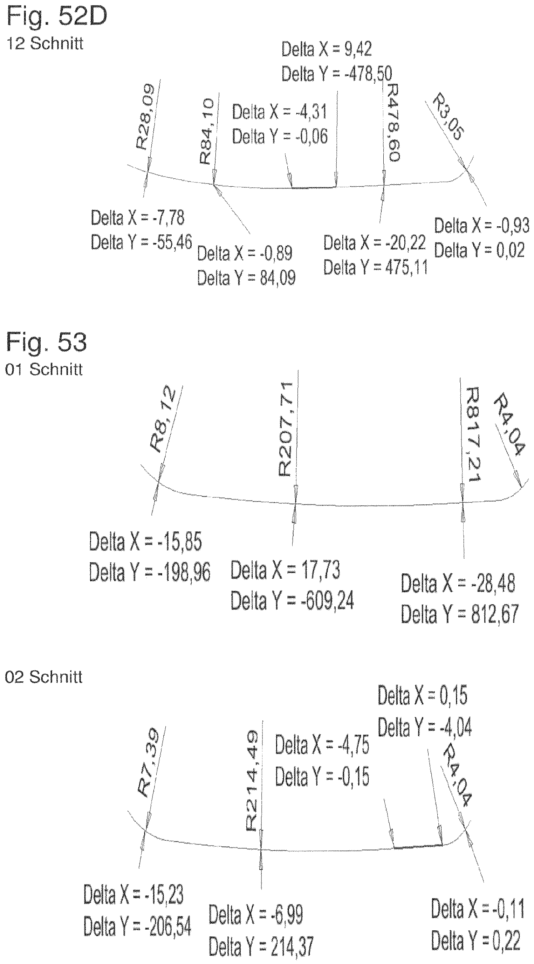

Die aus Fig. 52 bis 52D ersichtlichen Schnitte 1 bis 12 zeigen einen vergleichsweise weniger stark strukturierten Zahnteilbogen, mit einer dementsprechend schwächer ausgeprägten Wellung, der insofern alternativ als Fräsrohling verwendbar ist.

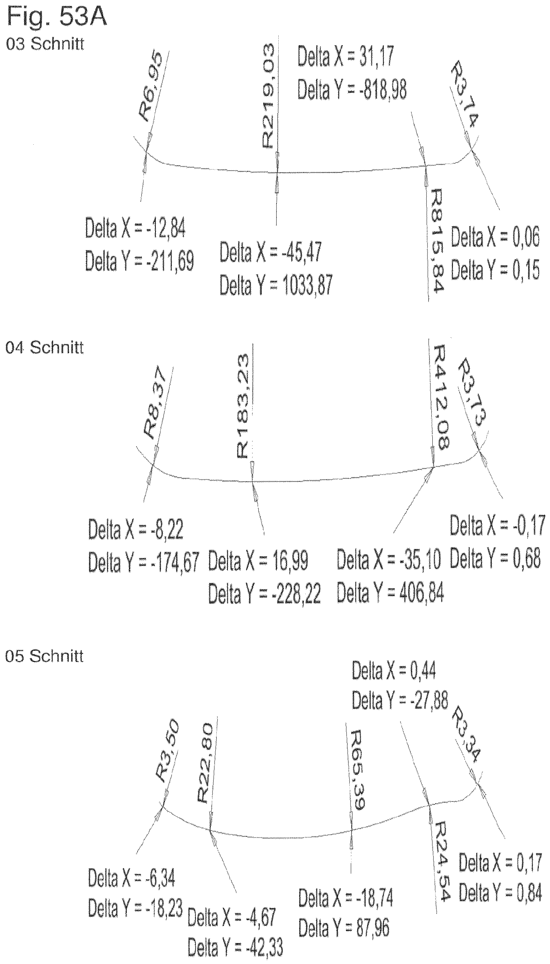

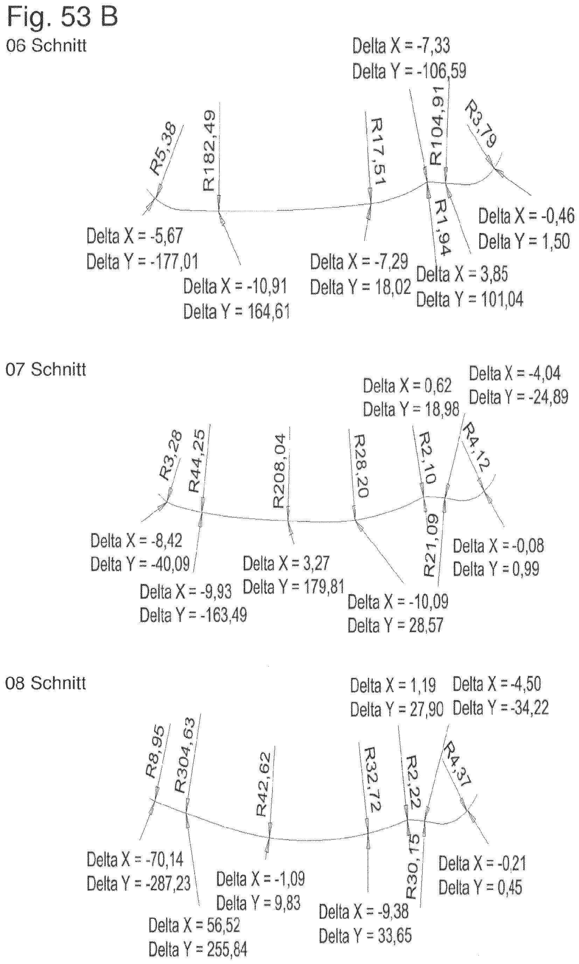

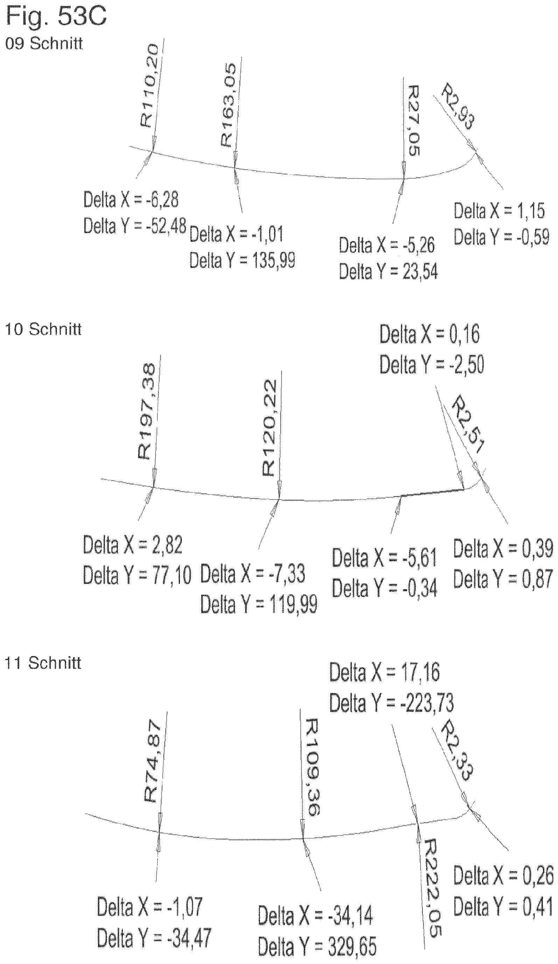

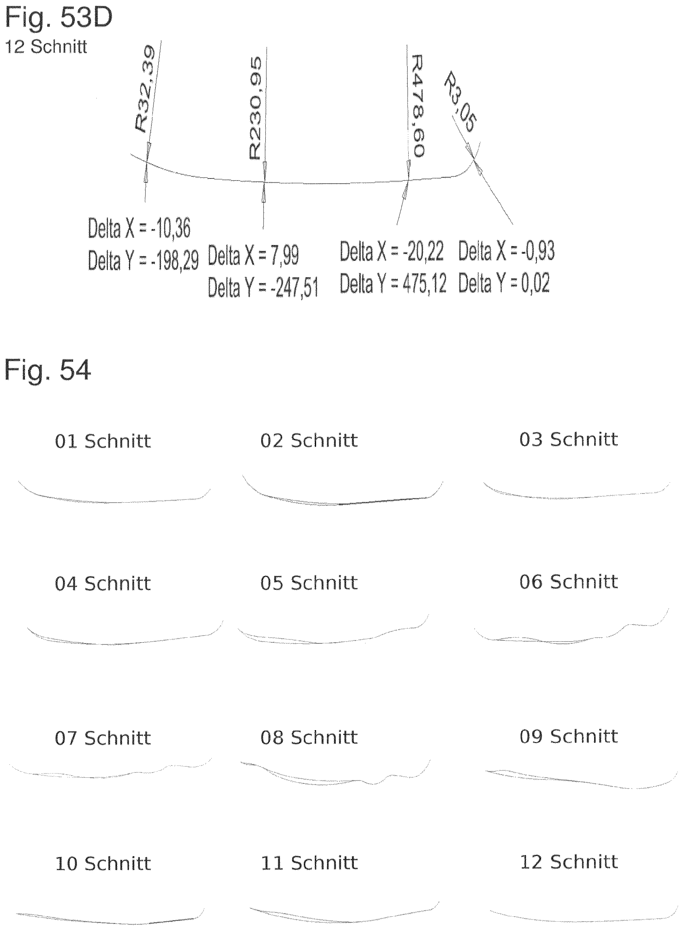

Ein demgegenüber modifizierter Zahnteilbogen ist aus Fig. 53 bis 53D ersichtlich. Dies ist eine noch stärker vereinfachte Variante mit einem distal ncoh etwas schlechteren ästhetischen Ergebnis, da die Welligkeit im distalen Bereich reduziert wird.

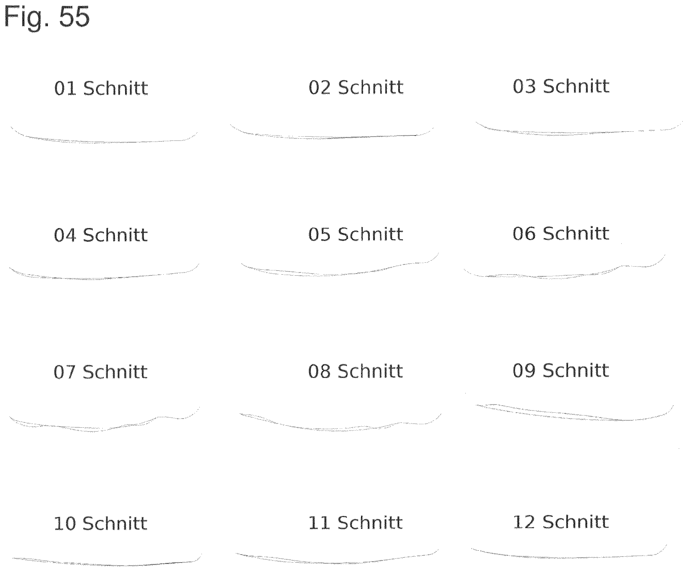

Zur Verdeutlichung sind die Kurven der Schnitte aus den Figuren 51 und 52 in Fig. 54 übereinanderliegend eingetragen, und die aus den Fig. 51 und 53 in Fig. 55.

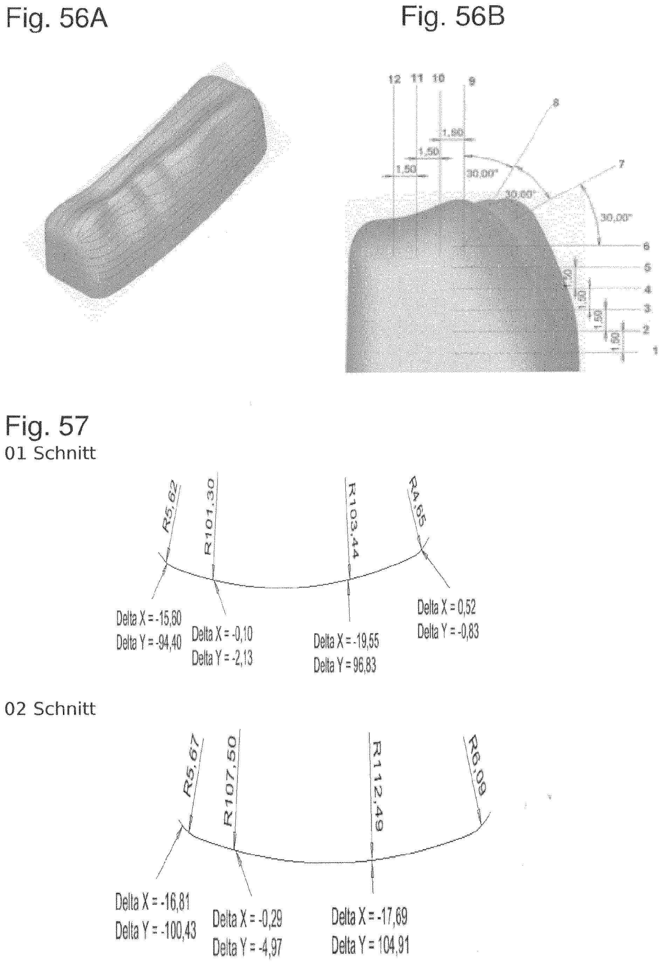

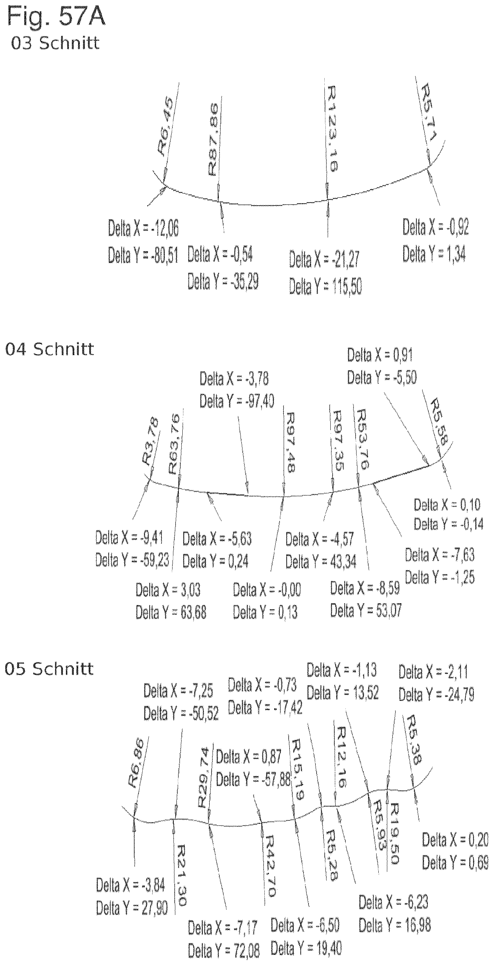

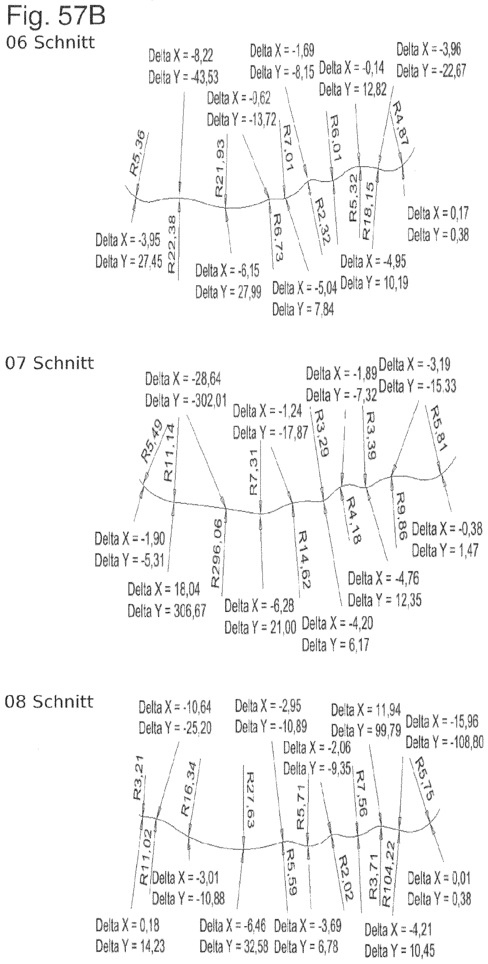

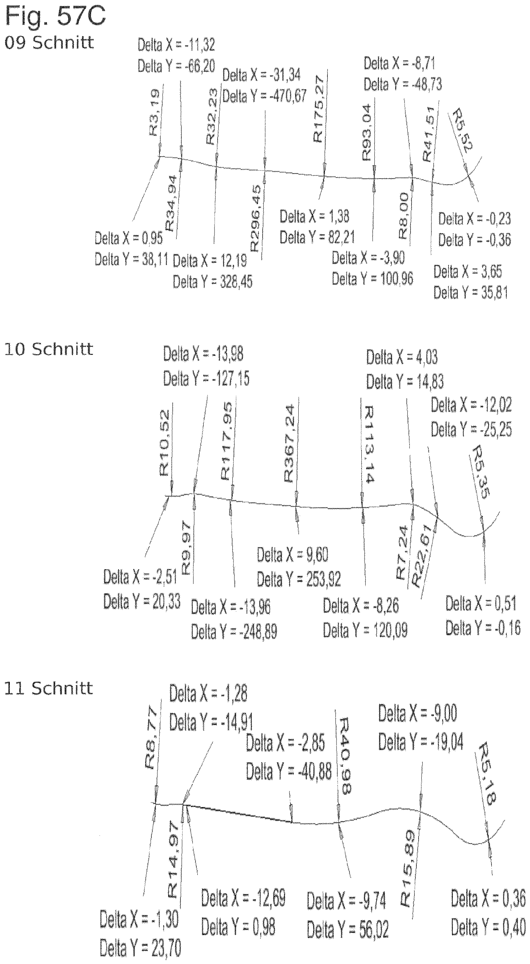

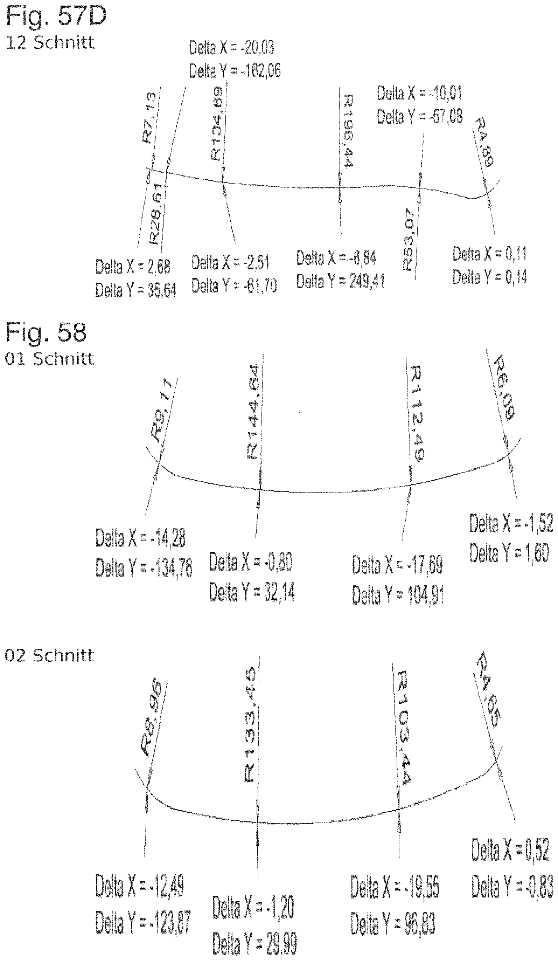

Fig. 56A zeigt einen Zahnteilbogen für die Zähne 3 bis 7 im Oberkiefer. Die Schichtlagen, wie sie in Fig. 57 bis 57D beschrieben sind, sind aus Fig. 56B ersichtlich.

Die aus Fig. 57 bis 57D ersichtlichen Schnitte 1 bis 12 zeigen einen vergleichsweise stark strukturierten Zahnteilbogen, mit einer dementsprechend stärker ausgeprägten Wellung.

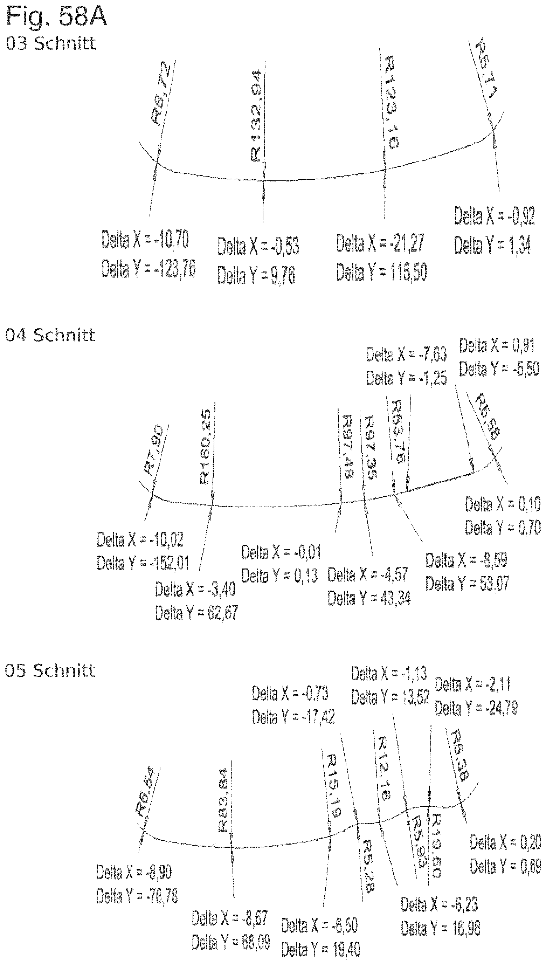

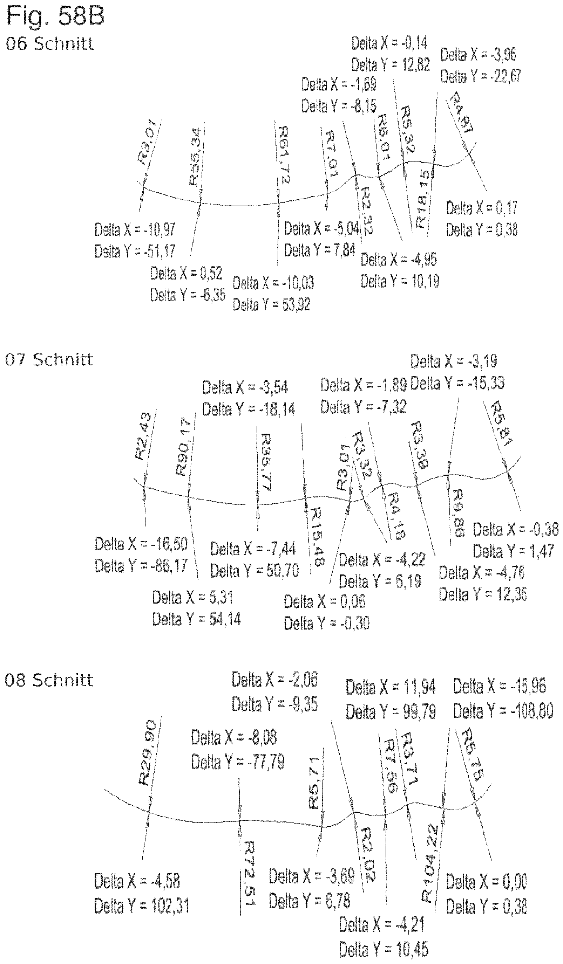

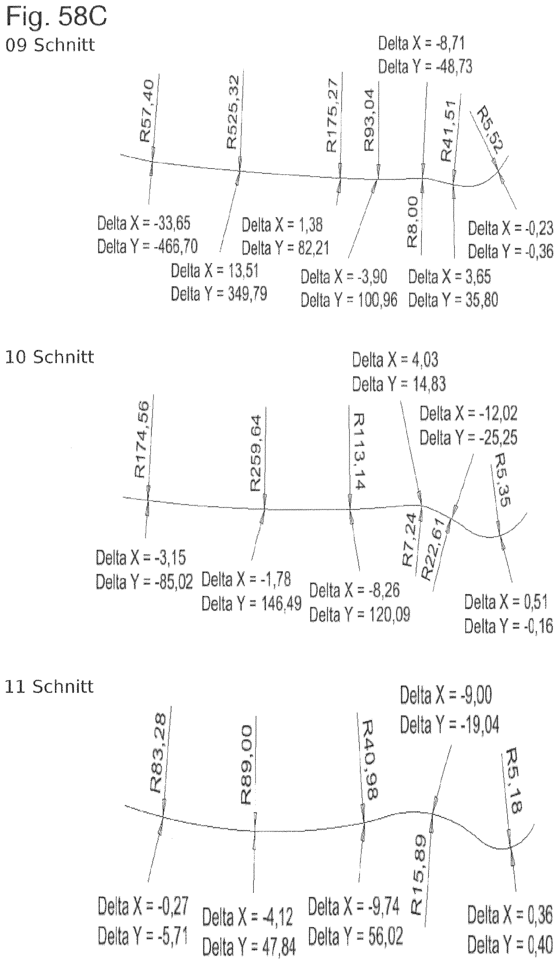

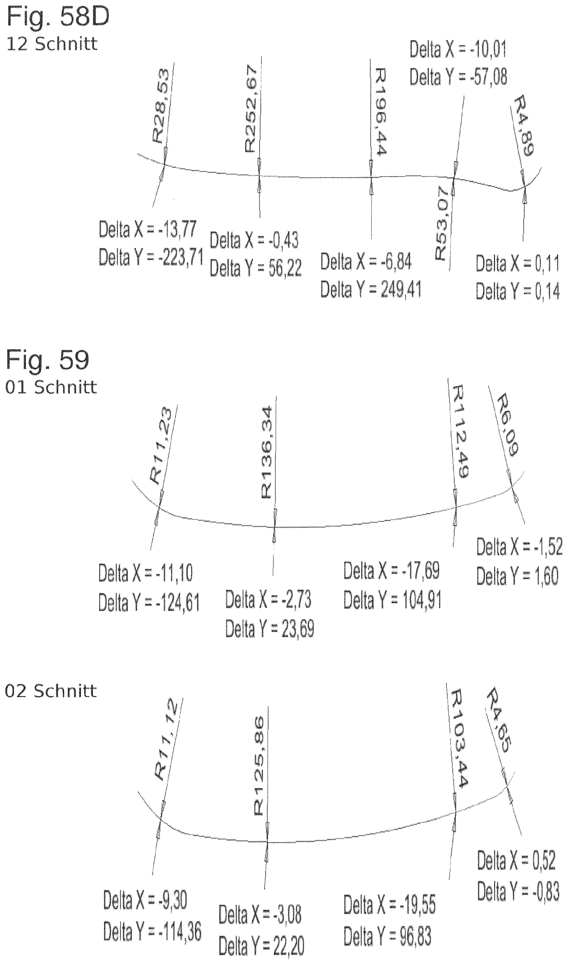

Die aus Fig. 58 bis 58D ersichtlichen Schnitte 1 bis 12 zeigen einen vergleichsweise weniger stark strukturierten Zahnteilbogen, mit einer dementsprechend schwächer ausgeprägten Wellung, der insofern alternativ als Fräsrohling verwendbar ist.

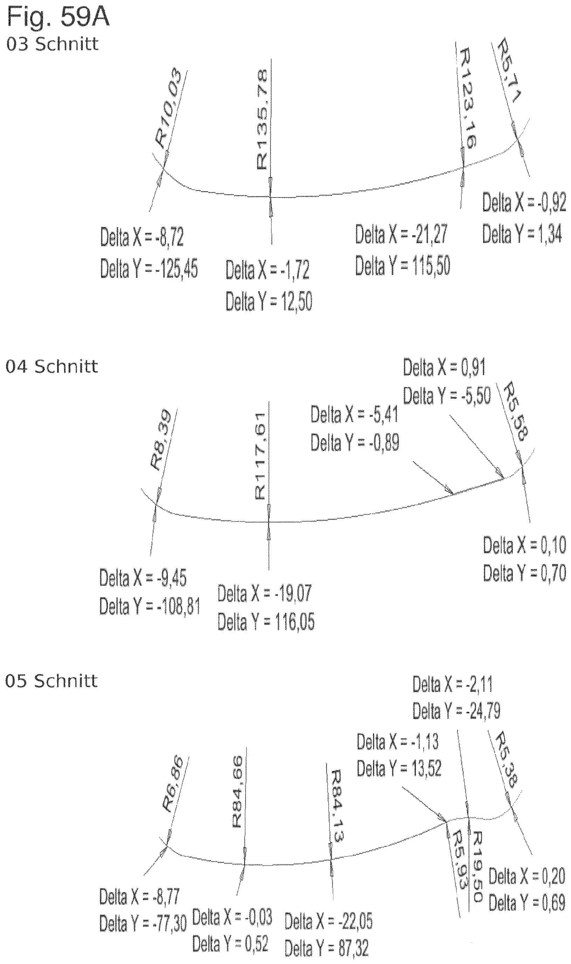

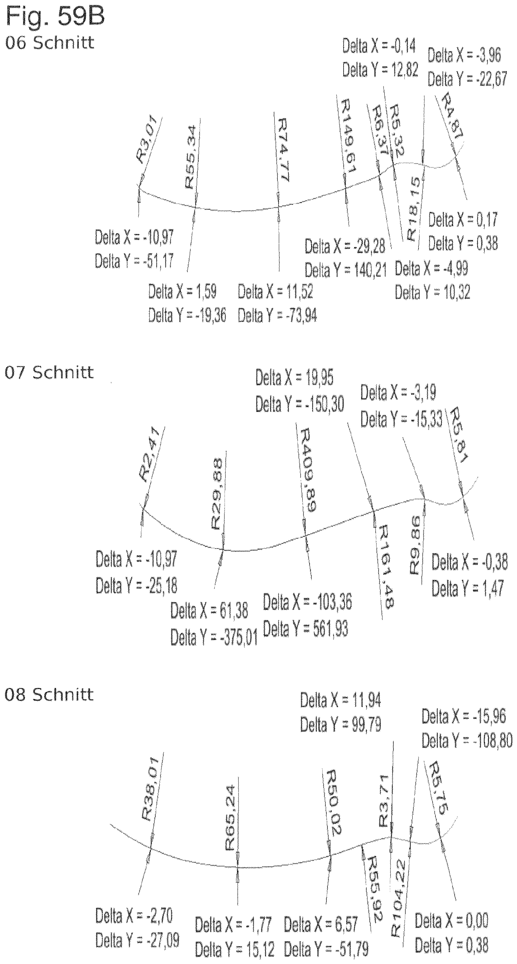

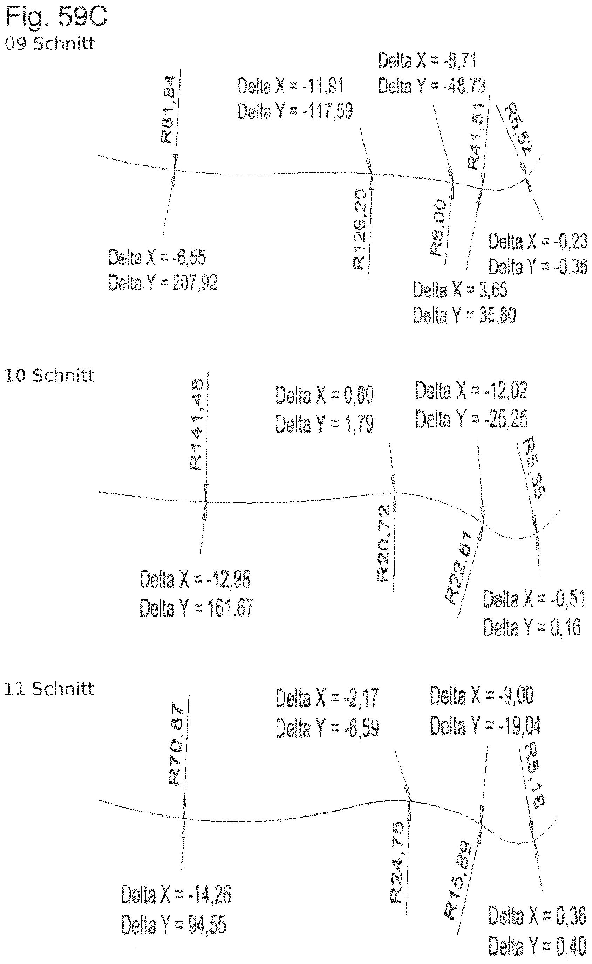

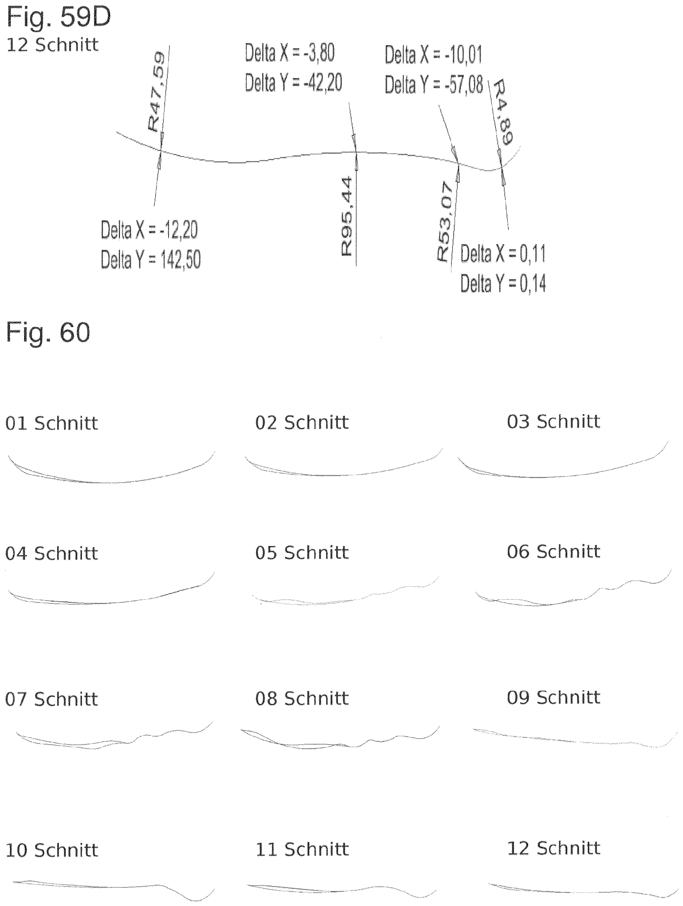

Ein demgegenüber modifizierter und noch weniger welliger Zahnteilbogen ist aus Fig. 59 bis 59D ersichtlich.

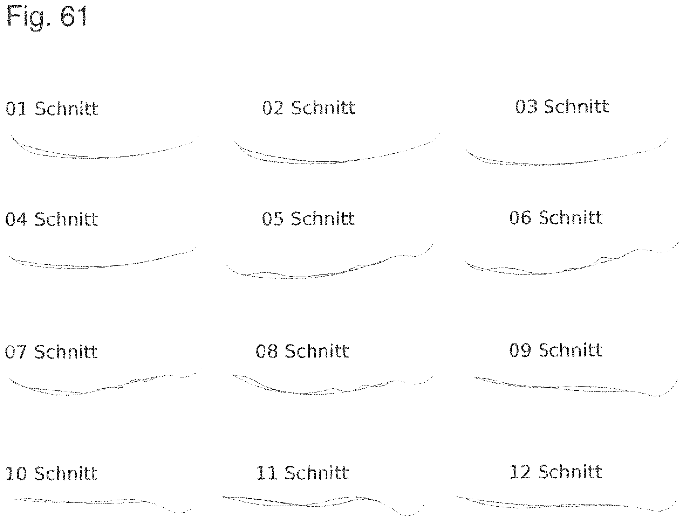

Zur Verdeutlichung sind die Kurven der Schnitte aus den Figuren 57 und 58 in Fig. 60 übereinanderliegend eingetragen, und die aus den Fig. 57 und 59 in Fig. 61.

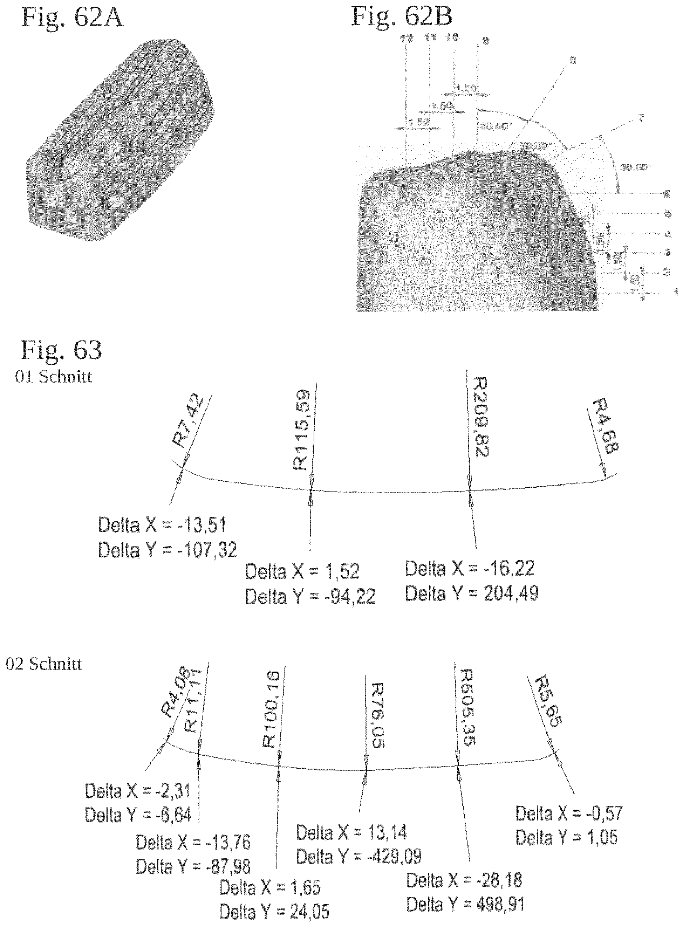

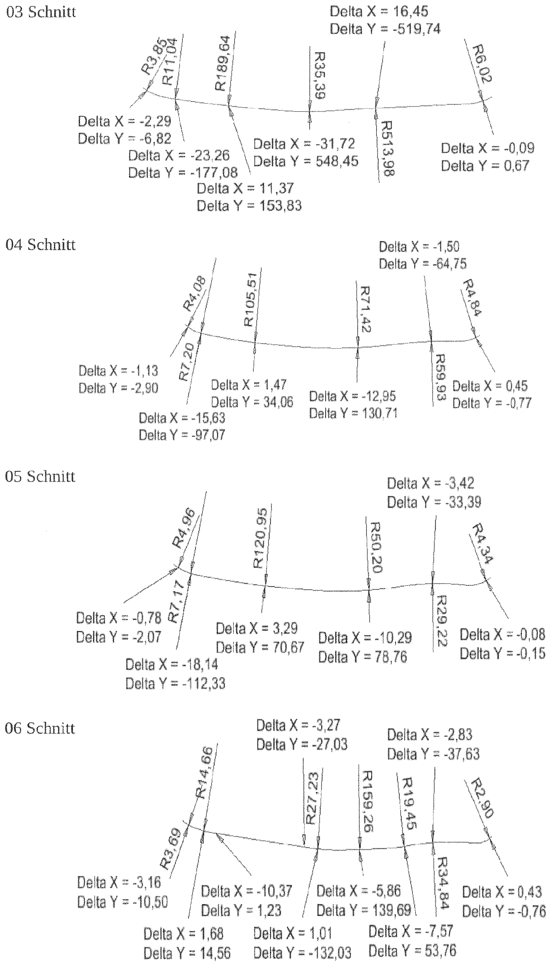

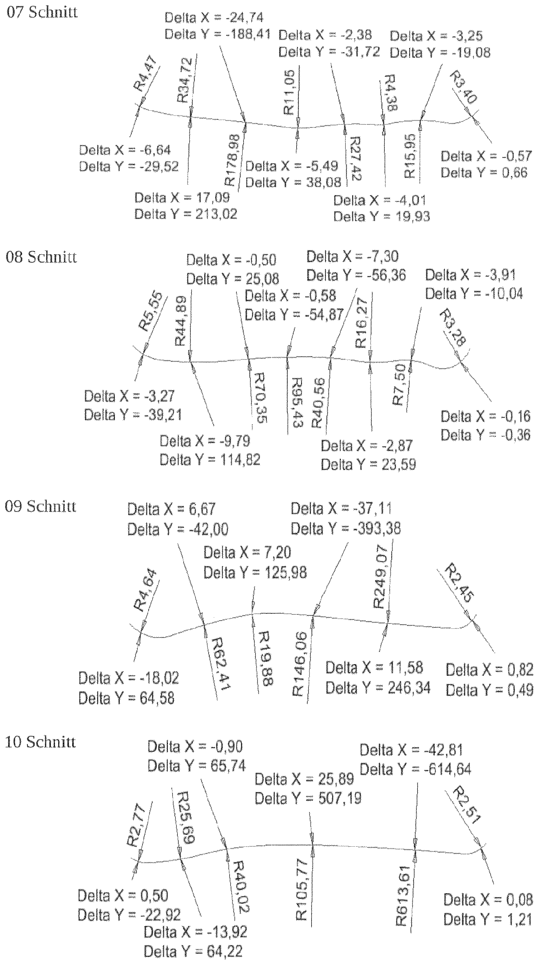

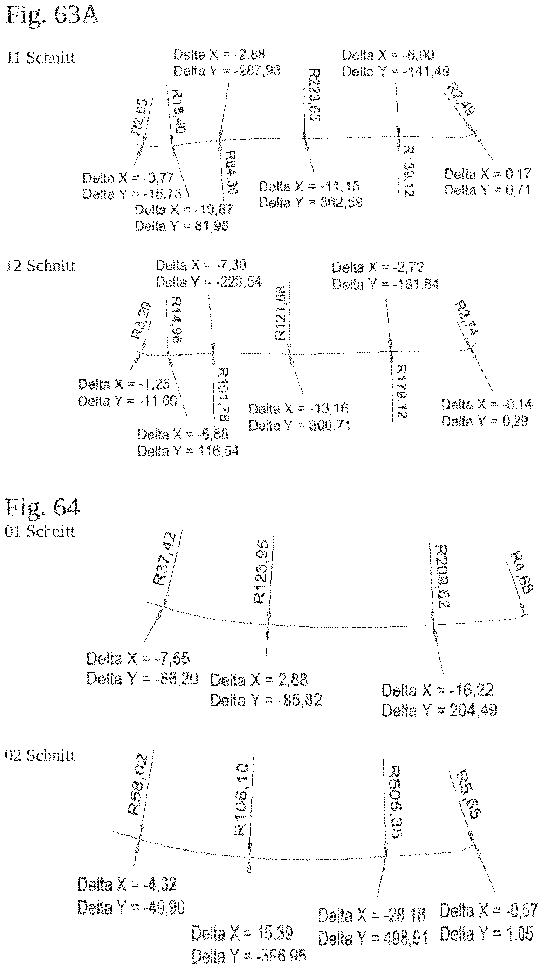

Fig. 62A zeigt einen Zahnteilbogen für die Zähne 4 bis 7 im Unterkiefer. Die Schichtlagen, wie sie in Fig. 63 beschrieben sind, sind aus Fig. 62B ersichtlich.

Die aus Fig. 63 und 63A ersichtlichen Schnitte 1 bis 12 zeigen einen vergleichsweise stark strukturierten Zahnteilbogen, mit einer dementsprechend stärker ausgeprägten Wellung.

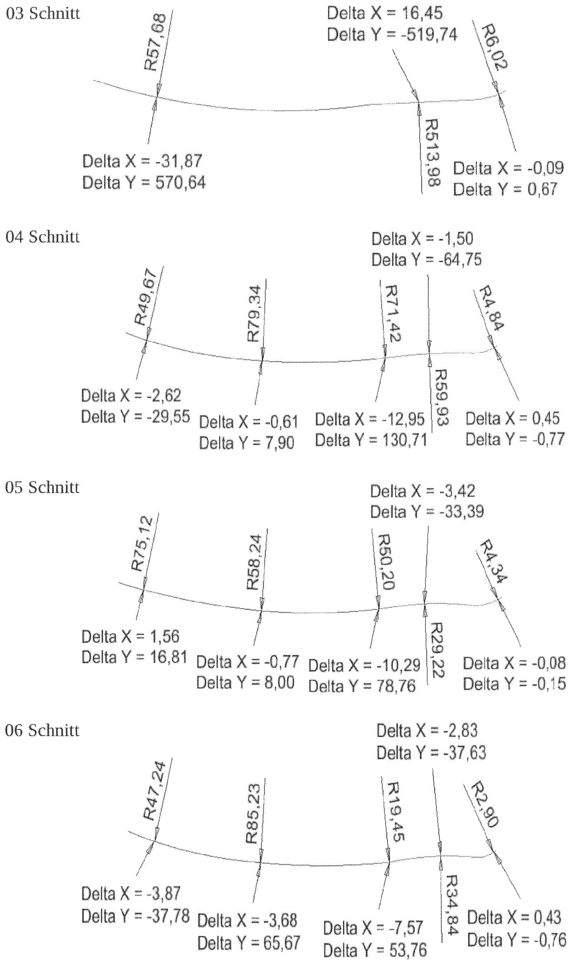

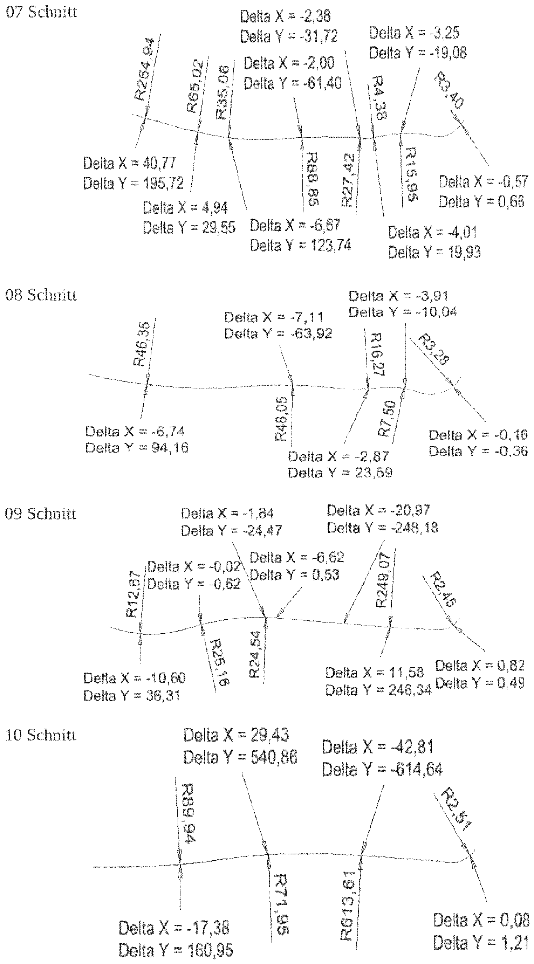

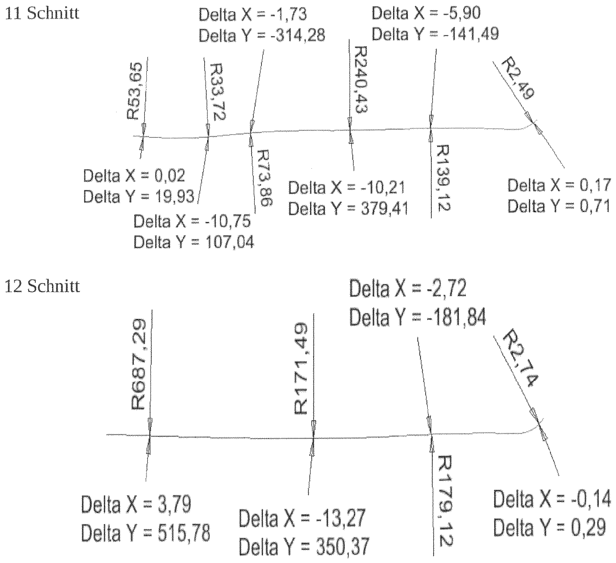

Die aus Fig. 64 ersichtlichen Schnitte 1 bis 12 zeigen einen vergleichsweise weniger stark strukturierten Zahnteilbogen, mit einer dementsprechend schwächer ausgeprägten Wellung, der insofern als Fräsrohling verwendbar ist.

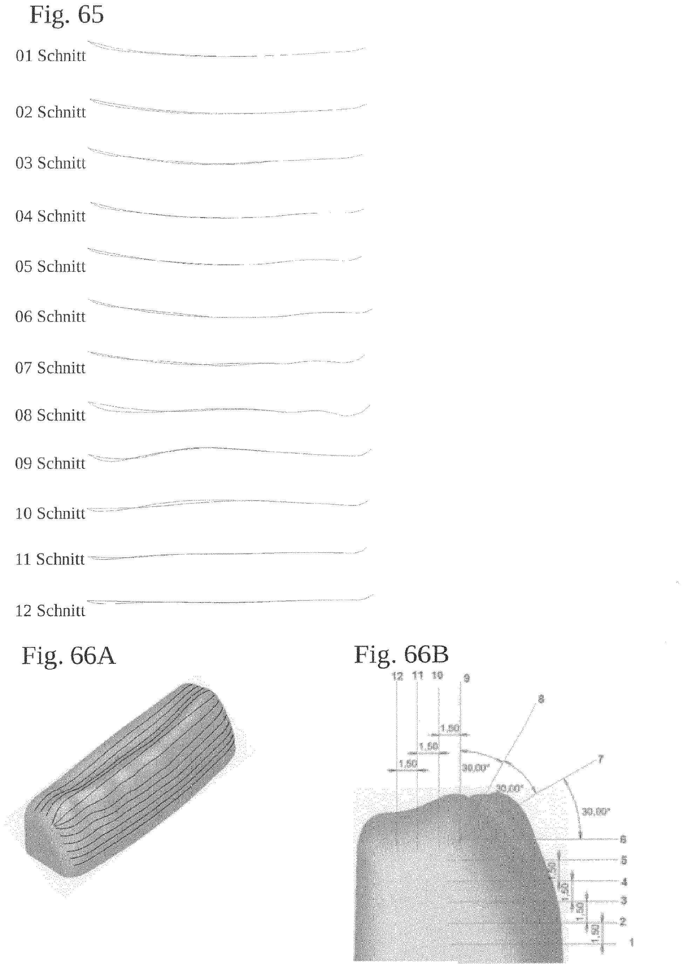

Zur Verdeutlichung sind die Kurven der Schnitte aus den Figuren 63 und 64 in Fig. 65 übereinanderliegend eingetragen.

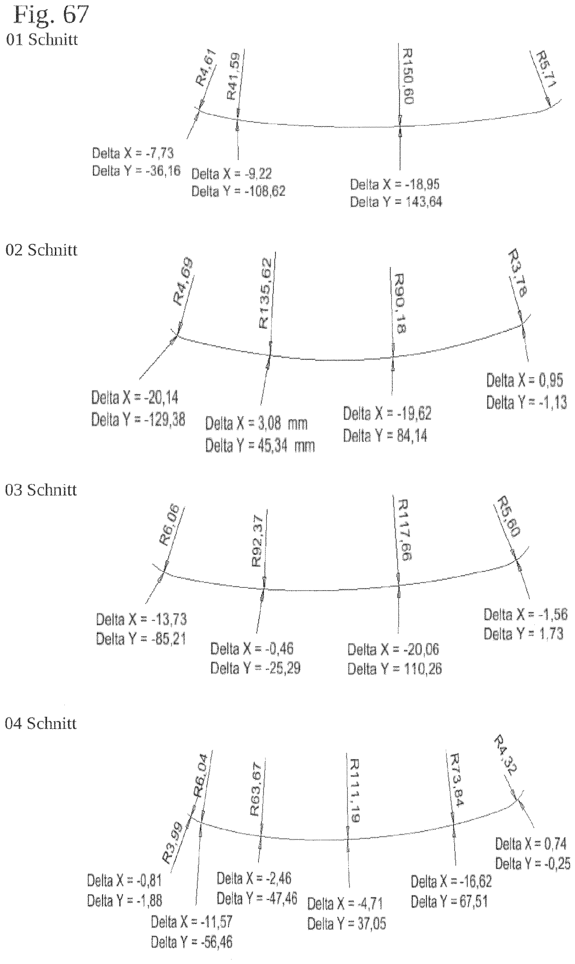

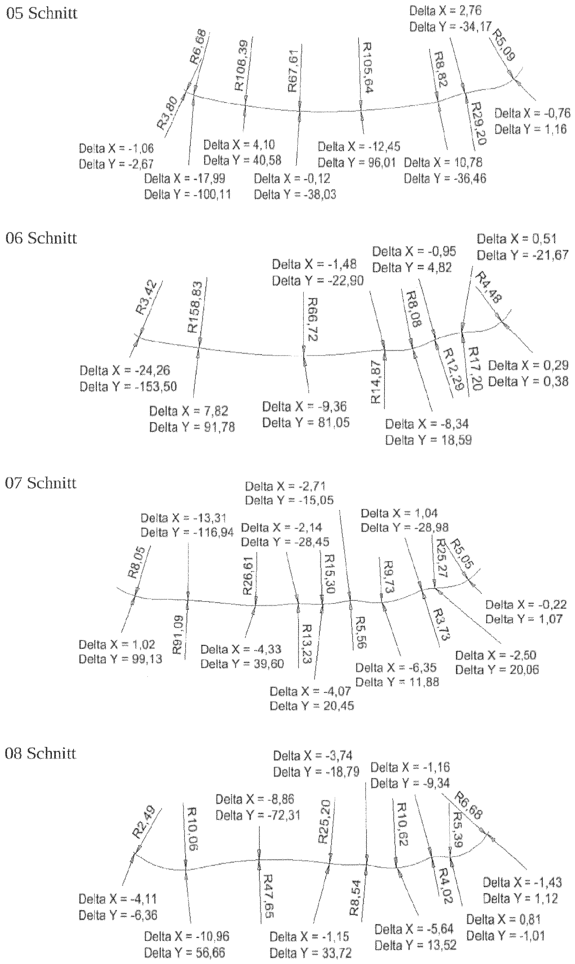

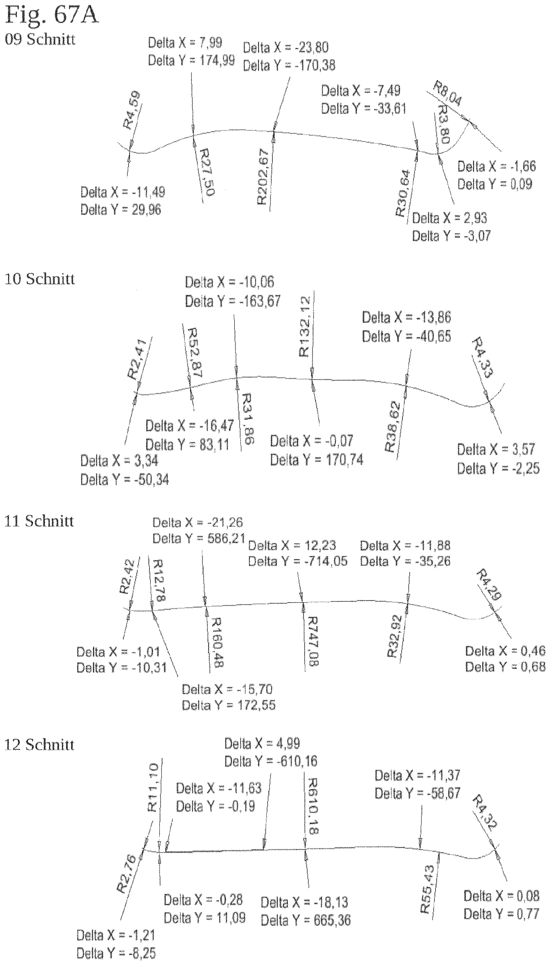

Fig. 66A zeigt einen Zahnteilbogen für die Zähne 3 bis 7 im Unterkiefer. Die Schichtlagen, wie sie in Fig. 67 beschrieben sind, sind aus Fig. 66B ersichtlich.

Die aus Fig. 67 und 67A ersichtlichen Schnitte 1 bis 12 zeigen einen vergleichsweise stark strukturierten Zahnteilbogen, mit einer dementsprechend stärker ausgeprägten Wellung.

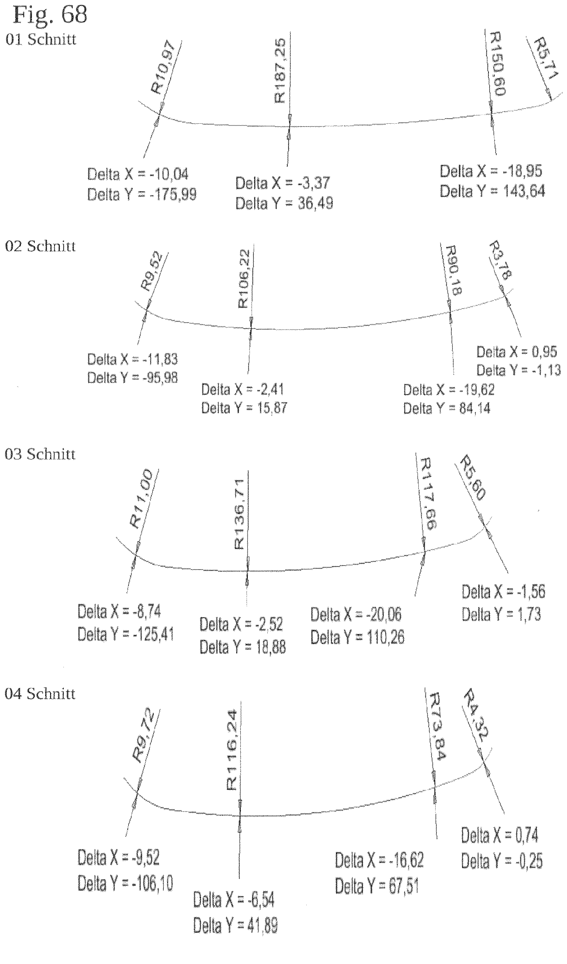

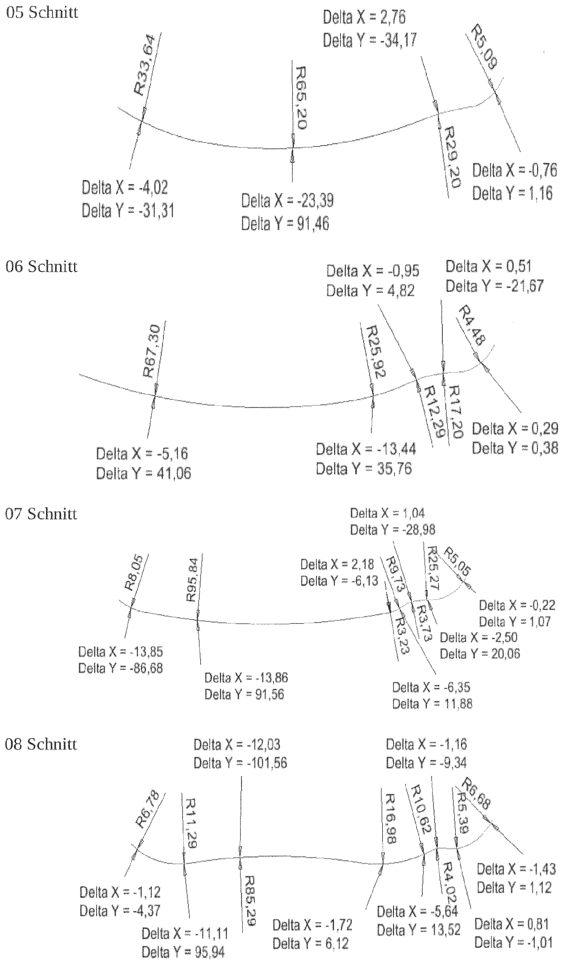

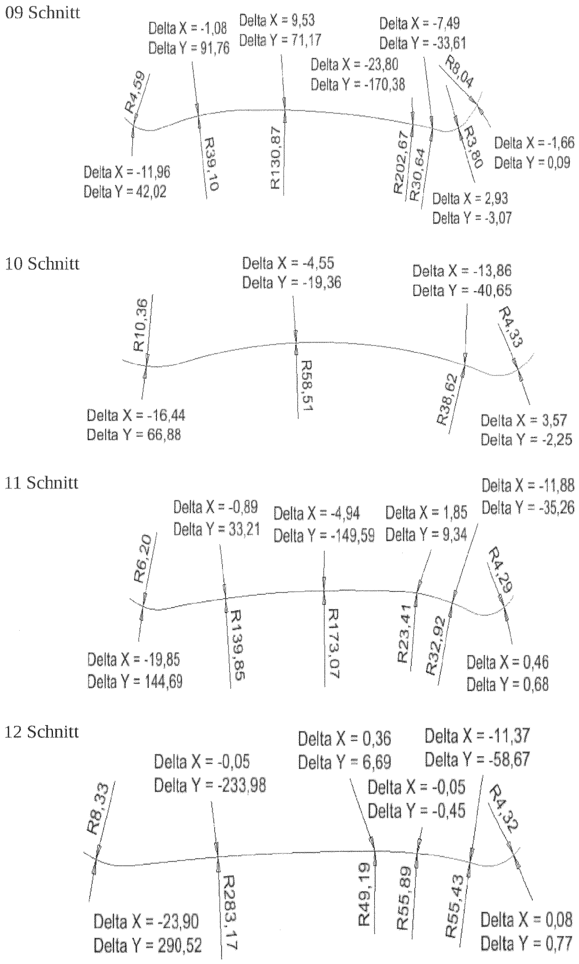

Die aus Fig. 68 ersichtlichen Schnitte 1 bis 12 zeigen einen vergleichsweise weniger stark strukturierten Zahnteilbogen, mit einer dementsprechend schwächer ausgeprägten Wellung, der insofern alternativ als Fräsrohling verwendbar ist.

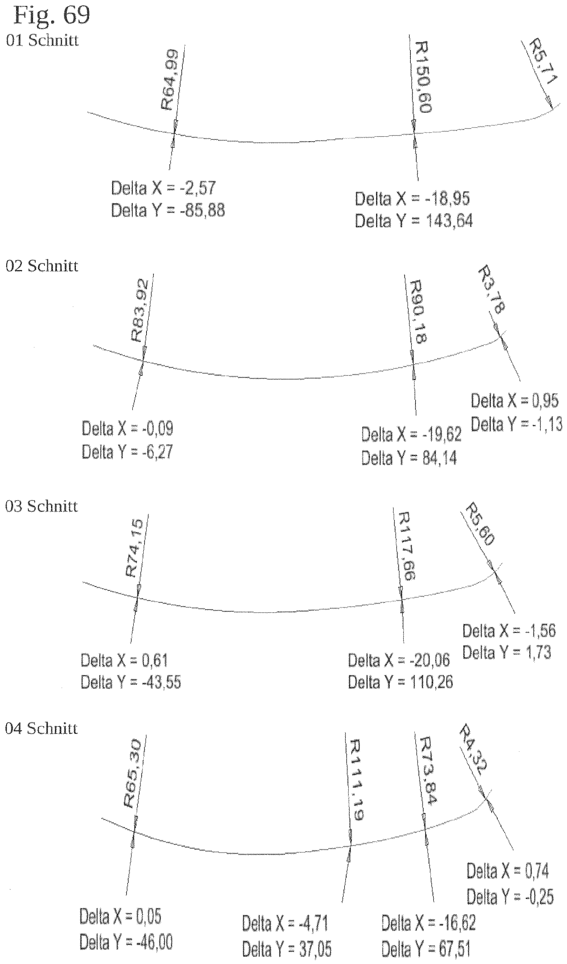

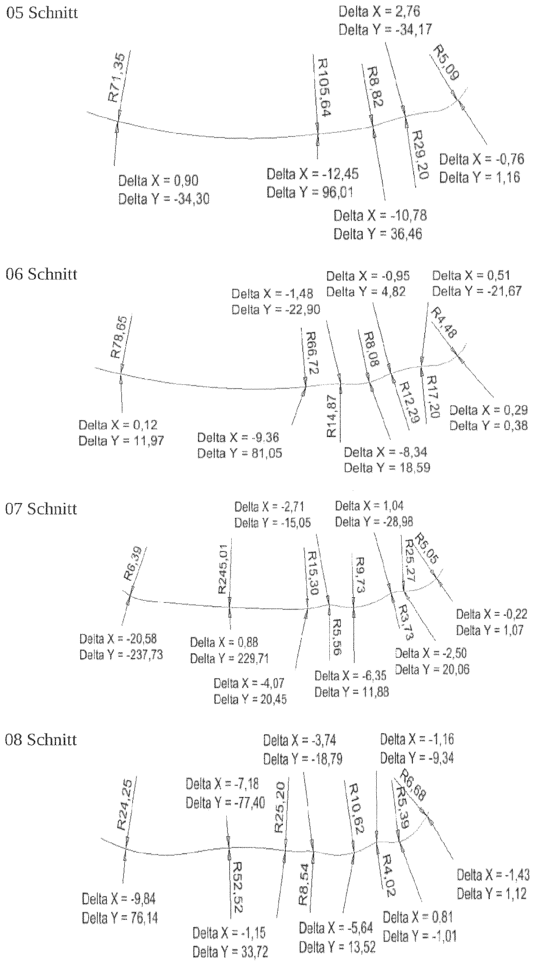

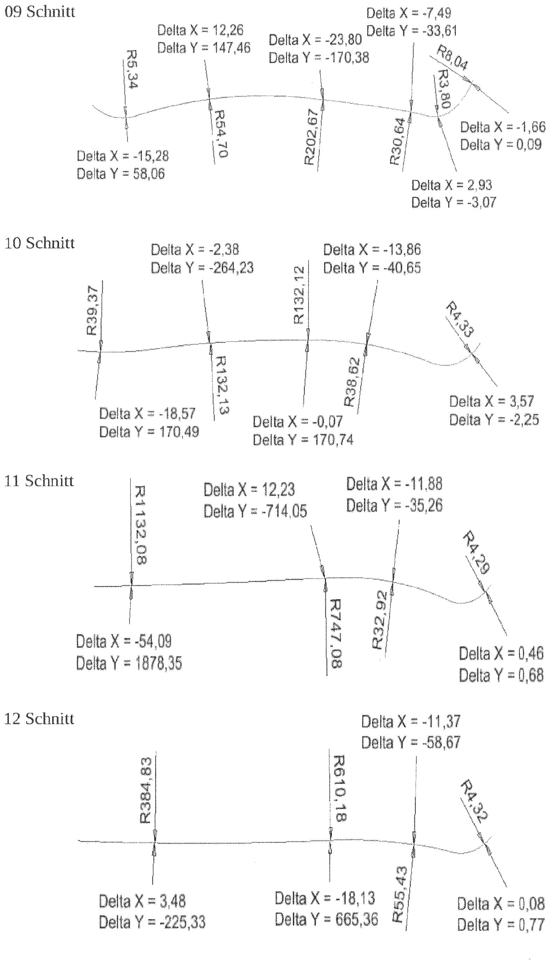

Ein demgegenüber modifizierter und noch weniger welliger Zahnteilbogen ist aus Fig. 69 ersichtlich.

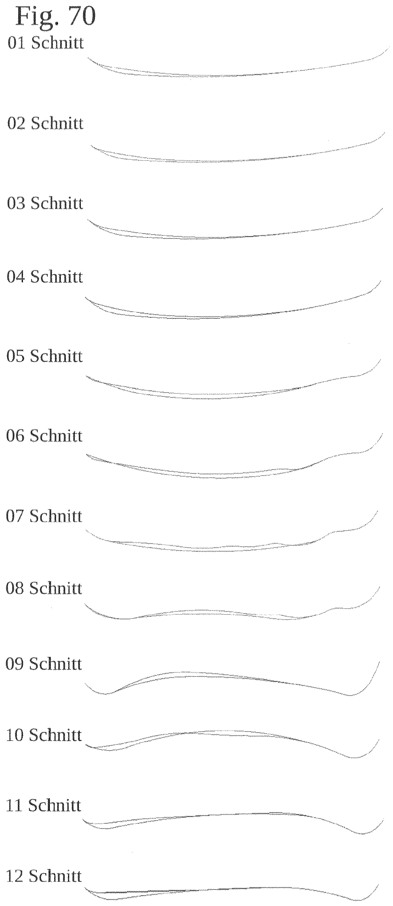

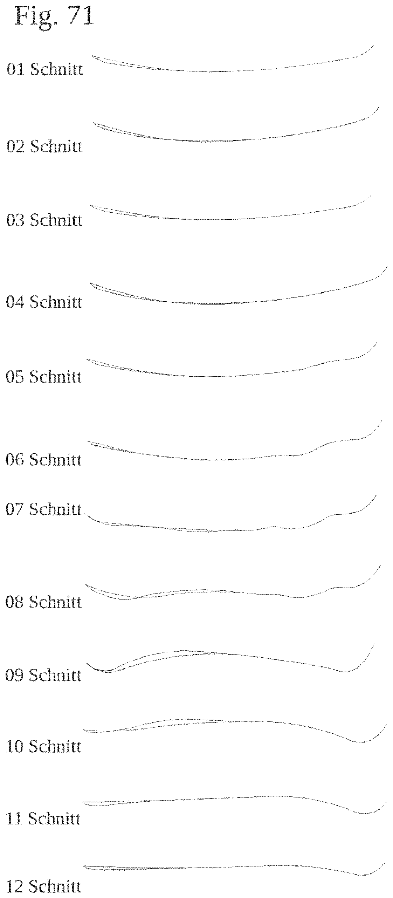

Zur Verdeutlichung sind die Kurven der Schnitte aus den Figuren 67 und 68 in Fig. 70 übereinanderliegend eingetragen, und die aus den Fig. 67 und 69 in Fig. 71.

Eine weitere Ausführungsform der Erfindung ergibt sich aus der nachstehenden Tabelle 1. Es handelt sich wiederum um einen Zahnteilbogen mit den Zahnpositionen 3-4-5-6-7 im Oberkiefer, und die angegebenen Werte folgen dem vorstehend erläuterten Schema, wobei zusätzlich noch Werte für die Z-Achse im kartesischen Koordinatensystem angegeben sind, also der in vestibulär-lingualer Richtung verlaufenden Achse. Es ist auch die Drehachse und deren Start mit den angegebenen Koordinaten x, y und z eingetragen. Ein "-" bezeichnet eine Linie statt einen Radius.

Es liegt je eine Abfolge von Teilkreisbögen vor, z.B. bei Schnitt 1 von 4 mit den Positionen 1 bis 4.

Bei Schnitt 1 ist an Position 1 der Kreisbogenmittelpunkt als Ursprung bemaßt (Koordinatenwerte 0,0,0), und der Teilkreisradius beträgt hier 6,09. Der 2. Teilkreisbogen hat einen Radius von 112,48, und sein Mittelpunkt ist gegenüber dem des ersten um -17,69 in X-Richtung, um 104,91 in Y-Richtung und um 0 in Z-Richtung versetzt.

Entsprechendes gilt für die weiteren Werte.

Die Schnitte 1 bis 12 entsprechen in Ihrer Lage denen in Fig. 56B.

Eine weitere Ausführungsform der Erfindung ergibt sich aus der nachstehenden Tabelle 2. Es handelt sich wiederum um einen Zahnteilbogen mit den Zahnpositionen 4-5-6-7 im Unterkiefer, und die angegebenen Werte folgen dem vorstehend erläuterten Schema.

Die Schnitte 1 bis 12 entsprechen in Ihrer Lage denen in Fig. 62B.

Eine weitere Ausführungsform der Erfindung ergibt sich aus der nachstehenden Tabelle 3. Es handelt sich wiederum um einen Zahnteilbogen mit den Zahnpositionen 3-4-5-6-7 im Unterkiefer, und die angegebenen Werte folgen dem vorstehend erläuterten Schema.

Die Schnitte 1 bis 12 entsprechen in Ihrer Lage denen in Fig. 66B.

**Tabelle 1**

| | | | | | | | | | | X | Y | Z |
|---|---|---|---|---|---|---|---|---|---|---|---|---|
| | | | | | | | Drehachse Richtung X | | | 0 | 0,03 | 7,5 |
| Schnitt | 01 | 02 | 03 | 04 | 05 | 06 | 07 | 08 | 09 | 10 | 11 | 12 |
| Drehung | 0° | 0° | 0° | 0° | 0° | 0° | 30° | 60° | 90° | 90° | 90° | 90° |
| Position 1 | 6,09 | 4,65 | 5,71 | 0,58 | 5,38 | 4,87 | 5,81 | 5,75 | 5,52 | 5,35 | 5,18 | 4,89 |
| X | 0,00 | 0,52 | -0,92 | 0,10 | 0,20 | 0,17 | -0,38 | 0,01 | -0,23 | 0,51 | 0,36 | 0,11 |
| Y | 0,00 | 0,83 | 1,34 | -0,14 | 0,69 | 0,38 | 1,47 | 0,38 | -0,36 | -0,16 | 0,40 | 0,14 |
| Z | 0,00 | 1,50 | 1,50 | 1,50 | 1,50 | 1,50 | 1,13 | 1,72 | 1,68 | 1,50 | 1,50 | 1,50 |
| Position 2 | 112,48 | 103,44 | 123,16 | - | 19,50 | 18,15 | 9,86 | 104,22 | 41,51 | 22,61 | 15,89 | 53,07 |
| X | -17,69 | 19,55 | 21,27 | 0,91 | 2,11 | -3,96 | -3,19 | -15,96 | 3,65 | -12,02 | -9,00 | -10,01 |
| Y | 104,9 1 | 96,83 | 115,50 | -5,50 | -24,79 | 22,67 | 15,33 | -108,80 | 35,81 | -25,25 | -19,04 | -57,08 |
| Z | 0,00 | 0,00 | 0,00 | 0,00 | 6,00 | 0,00 | 0,00 | 0,00 | 0,00 | 0,00 | 0,00 | 0,00 |
| Position 3 | 107,50 | 101,30 | 87,86 | - | 5,39 | 5,32 | 3,39 | 3,71 | 8,00 | 7,24 | 40,98 | 196,44 |
| X | -0,29 | -0,10 | -0,54 | -7,63 | -1,13 | -0,14 | -4,76 | 11,94 | -8,71 | 4,03 | -9,74 | -6,84 |
| Y | -4,97 | -2,13 | -35,29 | -1,25 | 13,52 | 12,82 | 12,35 | 99,79 | -48,73 | 14,83 | 56,02 | 249,41 |
| Z | 0,00 | 0,00 | 0,00 | 0,00 | 6,00 | 0,00 | 0,00 | 0,00 | -0,00 | 0,00 | 0,00 | -0,00 |
| Position 4 | 5,67 | 5,62 | 6,45 | 53,76 | 12,16 | 6,01 | 4,18 | 7,56 | 93,04 | 113,14 | - | 134,69 |
| X | -16,81 | -15,6012,0 | 12,06 | -8,59 | 6,23 | -4,95 | -1,89 | -4,21 | -3,90 | -8,26 | -2,85 | -2,51 |
| Y | -100,4 3 | -94,40 | -80,51 | 53,0 7 | 16,98 | 10,19 | -7,32 | 10,45 | 100,96 | 120,09 | -40,88 | -61,70 |
| Z | 0,00 | 0,00 | 0,00 | 0,00 | 6,00 | 0,00 | 0,00 | 0,00 | 0,00 | 0,00 | 0,00 | 0,00 |
| Position 5 | | | | 97,35 | 5,28 | 2,32 | 3,29 | 2,02 | 175,27 | 367,24 | | 28,61 |
| X | | | | -4,57 | 0,73 | -1,69 | -4,20 | -2,06 | 1,38 | 9,60 | -12,69 | -20,03 |
| Y | | | | 43,34 | -17,42 | -8,15 | 6,17 | -9,35 | 82,21 | 253,92 | 0,98 | -162,06 |
| Z | | | | 0,00 | 6,00 | 0,00 | 0,00 | 0,00 | 0,00 | 0,00 | 0,00 | 0,00 |
| Position 6 | 6' | | | 97,4 8 | 15,19 | 7,01 | 14,62 | 5,71 | 296,45 | 117,95 | 14,97 | 7,13 |
| X | | | | 0,00 | -6,50 | -5,04 | -1,24 | -3,69 | -31,34 | -13,96 | -1,28 | 2,68 |
| Y | | | | 0,13 | 19,40 | 7,84 | -17,87 | 6,78 | 470,67 | - | -14,91 | 35,64 |
| Z | | | | 0,00 | 6,00 | 0,00 | 0,00 | 0,00 | 0,00 | 0,00 | 0,00 | 0,00 |
| Position 7 | | | | - | 42,70 | 6,73 | 7,31 | 5,59 | 32,23 | 9,97 | 8,77 | |
| X | | | | -3,78 | 0,87 | -0,06 | -6,28 | -2,95 | 12,19 | -13,98 | -1,30 | |
| Y | | | | -97,40 | 57,88 | 13,72 | 21,00 | 10,89 | 328,45 | 127,15 | 23,70 | |
| Z | | | | 0,00 | 6,00 | 0,00 | 0,00 | 0,00 | 0,00 | 0,00 | 0,00 | |
| Position 8 | | | | - | 29,74 | 21,93 | 296,06 | 27,63 | 34,94 | 10,52 | | |
| X | | | | -5,63 | -7,17 | -6,15 | -28,64 | -6,46 | -11,32 | -2,51 | | |
| Y | | | | 0,24 | 72,08 | 27,99 | 302,01 | 32,58 | -66,20 | 20,33 | | |
| Z | | | | 0,00 | 6,00 | 0,00 | 0,00 | 0,00 | 0,00 | 0,00 | | |
| Position 9 | | | | 63,76 | 21,30 | 22,38 | 11,14 | 16,34 | 3,19 | | | |
| X | | | | 3,03 | -7,25 | -8,22 | 18,04 | -3,01 | 0,95 | | | |
| Y | | | | 63,68 | 50,52 | 43,53 | 306,67 | 10,88 | 38,11 | | | |
| Z | | | | 0,00 | 6,00 | 0,00 | 0,00 | 0,00 | 0,00 | | | |
| Position 10 | | | | 3,78 | 6,86 | 5,63 | 5,49 | 11,02 | | | | |
| X | | | | -9,41 | 3,84 | -3,95 | -1,90 | -10,64 | | | | |
| Y | | | | -59,23 | 27,90 | 27,45 | -5,31 | -25,20 | | | | |
| Z | | | | 0,00 | 6,00 | 0,00 | 0,00 | 0,00 | | | | |
| Position 11 | | | | | | | | 3,21 | | | | |
| X | | | | | | | | 0,18 | | | | |
| Y | | | | | | | 14,23 | 14,23 | | | | |
| Z | | | | | | | | 0,00 | | | | |

**Tabelle 2**

| | | | | | | | | | | X | Y | Z |
|---|---|---|---|---|---|---|---|---|---|---|---|---|
| | | | | | | | Drehachse Richtung X | | | 0 | 0,03 | 7,5 |
| | | | | | | | | | | | | |
| Schnitt | 01 | 02 | 03 | 04 | 05 | 06 | 07 | 08 | 09 | 10 | 11 | 12 |
| Drehung | 0° | 0° | 0° | 0° | 0° | 0° | 30° | 60° | 90° | 90° | 90° | 90° |
| Position 1 | 4,68 | 5,65 | 6,02 | 4,84 | 4,34 | 2,90 | 3,40 | 3,28 | 2,45 | 2,51 | 2,49 | 2,74 |
| X | 0,00 | -0,57 | -0,09 | 0,45 | -0,08 | 0,43 | -0,57 | -0,16 | 0,82 | 0,08 | 0,17 | -0,14 |
| Y | 0,00 | 1,05 | 0,67 | -0,77 | -0,15 | -0,76 | 0,66 | -0,36 | 0,49 | 1,21 | 0,71 | 0,29 |
| Z | 0,00 | 1,50 | 1,50 | 1,50 | 1,50 | 1,50 | 1,02 | -0,55 | -0,65 | 1,50 | 1,50 | 1,50 |
| Position 2 | 209,82 | 505,35 | 513,98 | 59,93 | 29,22 | 34,84 | 15,95 | 7,50 | 249,07 | 613,61 | | 179,12 |
| X | -16,22 | -28,18 | 16,45 | -1,50 | -3,42 | -2,83 | -3,25 | -3,91 | 11,58 | -42,81 | -5,90 | -2,72 |
| Y | 204,49 | 498,91 | -519,74 | -64,75 | -33,39 | -37,63 | -19,08 | -10,04 | 246,34 | -614,64 | -141,49 | -181,84 |
| Z | 0,00 | 0,00 | 0.00 | 0,00 | 0,00 | 0,00 | 0,00 | 0,00 | 0,00 | 0,00 | 0,00 | 0,00 |
| Position 3 | 115,59 | 76,05 | 35,39 | 71,42 | 50,20 | 19,45 | 4,38 | 16,27 | 146,06 | 105,77 | 223,65 | 121,88 |
| X | 1,52 | 13,14 | -31,72 | -12,95 | -10,29 | -7,57 | -4,01 | -2,87 | -37,11 | 25,89 | -11,15 | -13,16 |
| Y | -94,22 | -429,09 | 548,45 | 130,71 | 78,76 | 53,76 | 19,93 | 23,59 | -393,36 | 3507,19 | 362,59 | 300,71 |
| Z | 0,00 | 0,00 | 0,00 | 0,00 | 0,00 | 0,00 | 0,00 | 0,00 | 0,00 | 0,00 | 0,00 | 0,00 |
| Position 4 | 7,42 | 100,16 | 189,64 | 105,51 | 120,95 | 159,26 | 27,42 | 40,56 | 19,88 | 40,02 | 64,30 | 101,78 |
| X | -13,51 | 1,65 | 11,37 | 1,47 | 3,29 | -5,86 | -2,38 | -7,30 | 7,20 | -0,90 | -2,88 | -7,30 |
| Y | -107,32 | 24,05 | 153,83 | 34,06 | 70,67 | 139,69 | -31,72 | -56,36 | 125,98 | 65,74 | -287,93 | -223,54 |
| Z | 0,00 | 0,00 | 0,00 | 0,00 | 0,00 | 0,00 | 0,00 | 0,00 | 0,00 | 0,00 | 0,00 | 0,00 |
| Position 5 | | 11,11 | 11,04 | 7,20 | 7,17 | 27,23 | 11,05 | 95,43 | 62,41 | 25,69 | 18,40 | 14,96 |
| X | | -13,76 | -23,26 | -15,63 | -18,14 | 1,01 | -5,49 | -0,58 | 6,67 | -13,92 | -10,87 | -6,86 |
| Y | | -87,98 | -177,0 | 8 -97,07 | -112,33 | -132,03 | 38,08 | -54,87 | -42,00 | 64,22 | 81,98 | 116,54 |
| Z | | 0,00 | 0,00 | 0,00 | 0,00 | 0,00 | 0,00 | 0,00 | 0,00 | 0,00 | 0,00 | 0,00 |
| Position 6 | | 4,08 | 3,85 | 4,08 | 4,96 | 0,00 | 1178,98 | 70,35 | 4,64 I | 2,77 | 2,65 | 3,29 |
| X | | -2,31 | -2,29 | -1,13 | -0,78 | -3,27 | -24,74 | -0,50 | -18,02 | 0,50 | -0,77 | -1,25 |
| Y | | -6,64 | -6,82 | -2,90 | -2,07 | -27,03 | -188,41 | 25,08 | 64,58 | -22,92 | -15,73 | -11,60 |
| Z | | 0,00 | 0,00 | 0,00 | 0,00 | 0,00 | 0,00 | 0,00 | 0,00 | 0,00 | 0,00 | 0,00 |
| Position 7 | | | | | | 0,00 | 34,72 | 44,89 | | | | |
| X | | | | | | -10,37 | 17,09 | -9,79 | | | | |
| Y | | | | | | 1,23 | 213,02 | 114,82 | | | | |
| Z | | | | | | 0,00 | 0,00 | 0,00 | | | | |
| Position 8 | | | | | | 14,66 | I 4,47 | 5,55 | | | | |
| X | | | | | | 1,68 | -6,64 | -3,27 | | | | |
| Y | | | | | | 14,56 | -29,52 | -39,21 | | | | |
| Z | | | | | | 0,00 | 0,00 | 0,00 | | | | |
| Position 9 | | | | | | 3,69 | | | | | | |
| X | | | | | | -3,16 | | | | | | |
| Y | | | | | | -10,50 | | | | | | |
| Z | | | | | | 0,00 | | | | | | |
| Position 10 | | | | | | | | | | | | |
| X | | | | | | | | | | | | |
| Y | | | | | | | | | | | | |
| Z | | | | | | | | | | | | |
| Position 1 | | | | | | | | | | | | |
| X | | | | | | | | | | | | |
| Y | | | | | | | | | | | | |

**Tabelle 3**

| | | | | | | | | | | X | Y | Z |
|---|---|---|---|---|---|---|---|---|---|---|---|---|
| | | | | | | | Drehachse Richtung X | | | 0 | 0,03 | 7,5 |
| | | | | | | | | | | | | |
| Schnitt | 01 | 02 | 03 | 04 | 05 | 06 | 07 | 08 | 09 | 10 | 11 | 12 |
| Drehung | 0° | 0° | 0° | 0° | 0° | 0° | 30° | 60° | 90° | 90° | 90° | 90° |
| Position 1 | 5,71 | 3,78 | 5,60 | 4,32 | 5,09 | 4,48 | 5,05 | 6,68 | 8,04 | 4,33 | 4,29 | 4,32 |
| X | 0,00 | 0,95 | -1,56 | 0,74 | -0,76 | 0,29 | -0,22 | -1,43 | -1,66 | 3,57 | 0,46 | 0,08 |
| Y | 0,00 | -1,13 | 1,73 | -0,25 | 1,16 | 0,38 | 1,07 | 1,12 | 0,09 | -2,25 | 0,68 | 0,77 |
| Z | 0,00 | 1.50 | 1.50 | 1.50 | 1.50 | 1.50 | 0.81 | 1.23 | 1.63 | 1,50 | 1,50 | 1,50 |
| Position 2 | 150,60 | 90,18 | 117,66 | 73,84 | 29,20 | 17,20 | 25,27 | 5,39 | 3,80 | 38,62 | 32,92 | 55,43 |
| X | -18,95 | -19,62 | -20,06 | -16,62 | 2,76 | 0,51 | -2,50 | 0,81 | 2,93 | -13,86 | -11,88 | -11,37 |
| Y | 143,64 | 84,14 | 110,26 | 67,51 | -34,17 | -21,67 | 20,06 | -1,01 | -3,07 | -40,65 | -35,26 | -58,67 |
| Z | 0,00 | 0,00 | 0,00 | 0,00 | 0,00 | 0.00 | 0,00 | 0,00 | 0,00 | 0,00 | 0,00 | 0,00 |
| Position 3 | 64,99 | 83,92 | 74,15 | 111,19 | 8,82 | 12,29 | 3,73 | 4,02 | 30,64 | 132,12 | 747,08 | 610,18 |
| X | -2,57 | -0,09 | 0,61 | -4,71 | -10,78 | -0,95 | 1,04 | -1,16 | -7,49 | -0,07 | 12,23 | -18,13 |
| Y | -85,88 | -6,27 | -43,55 | 37,05 | 36,46 | 4,82 | -28,98 | -9,34 | -33,61 | 170,74 | -714,05 | 665,36 |
| Z | 0,00 | 0,00 | 0,00 | 0,00 | 0.00 | 0.00 | 0.00 | 0,00 | 0,00 | 0.00 | 0,00 | 0,00 |
| Position 4 | | | | 65,30 | 105,64 | 8,08 | 9,73 | 10,62 | 202,67 | 132,13 | 1132,08 | 384,83 |
| X | | | | 0,05 | -12,45 | -8,34 | -6,35 | -5,64 | -23,80 | -2,38 | -54,09 | 3,48 |
| Y | | | | -46,00 | 96,01 | 18,59 | 11,88 | 13,52 | -170,38 | -264,23 | 1878,35 | -225,33 |
| Z | | | | 0,00 | 0,00 | 0,00 | 0,00 | 0,00 | 0,00 | 0,00 | 0,00 | 0,00 |
| Position 5 | | | | | 71,35 | 14,87 | 5,56 | 8,54 | 54,70 | 39,37 | 39,37 | |
| X | | | | | 0,90 | -1,48 | -2,71 | -3,74 | 12,26 | -18,57 | | |
| Y | | | | | -34,30 | -22,90 | -15,05 | -18,79 | 147,46 | 170,49 | | |
| Z | | | | | 0,00 | 0,00 | 0,00 | 0,00 | 0,00 | 0,00 | | |
| Position 6 | | | | | | 66,72 | 15,30 | 25,20 | 5,34 | | | |
| X | | | | | | -9,36 | -4,07 | -1,15 | -15,28 | | | |
| Y | | | | | | 81,05 | 20,45 | 33,72 | 58,06 | | | |
| Z | | | | | | 0,00 | 0,00 | 0,00 | 0,00 | | | |
| Position 7 | | | | | | 78,65 | 245,01 | 52,52 | | | | |
| X | | | | | | 0,12 | 0,88 | -7,18 | | | | |
| Y | | | | | | 11,97 | 229,71 | -77,40 | | | | |
| Z | | | | | | 0,00 | 0,00 | 0.00 | | | | |
| Position 8 | | | | | | | 6,39 | 24,25 | | | | |
| X | | | | | | | -20,58 | -9,84 | | | | |
| Y | | | | | | | -237,73 | 76,14 | | | | |
| Z | | | | | | | 0,00 | 0.00 | | | | |
| Position 9 | | | | | | | | | | | | |
| X | | | | | | | | | | | | |
| Y | | | | | | | | | | | | |
| Z | | | | | | | | | | | | |
| Position 10 | | | | | | | | | | | | |
| X | | | | | | | | | | | | |
| Y | | | | | | | | | | | | |
| Z | | | | | | | | | | | | |
| Position 11 | | | | | | | | | | | | |
| X | | | | | | | | | | | | |
| Y | | | | | | | | | | | | |
| Z | | | | | | | | | | | | |

## Patentansprüche

1. Zahnteilbogen, mit Dentinmasse (30) und mit Schneidemasse (32) und einer Grenzfläche zwischen diesen, mit einem Primärpositions-Zahnbereich und weiteren Zahnbereichen, die distaler angeordnet sind, wobei eine Wellung der Grenzfläche in okklusal-gingivaler Richtung abnimmt, **gekennzeichnet durch**
- eine Wellung der Grenzfläche, deren Amplitude, in distaler Richtung betrachtet, in mindestens einem Teilbereich der mesial-distalen Erstreckung, abnimmt,, und
- dass die Dentinmasse (30) einen lingual/palatinalen und einem vestibulärem Dentinmassenkamm aufweist und
- dass die Welligkeit des vestibulären Dentinmassenkamms signifikant größer, insbesondere mindestens 10 mal größer, als die Welligkeit des anderen Dentinmassenkamms ist..

2. Zahnteilbogen nach Anspruch 1, **dadurch gekennzeichnet, dass** die Dentinmasse (30) des Zahnteilbogens einstückig mit Einschnürungen an den Zahnübergängen ausgebildet ist und dass die Einschnürung zwischen dem Primärpositions-Zahnbereich und dem nachfolgenden Zahnbereich, den Sekundärpositions-Zahnbereich, aus okklusaler Richtung betrachtet, tiefer als die Einschnürung an nachfolgenden Zahnübergängen ist und insbesondere eine Welligkeit von 10 bis 30 Prozent der Zahntiefe in lingual/palatinal-vestibulärer Richtung betrachtet ist.

3. Zahnteilbogen nach einem der vorhergehenden Ansprüche, **dadurch gekennzeichnet, dass** sich zwischen einem vestibulären Dentinmassenkamm und einem weiteren Dentinmassenkamm eine Fossa erstreckt, die in mesialer Richtung von dem Primärpositions-Zahnbereich begrenzt ist und deren Breite in distaler Richtung betrachtet zunimmt und insbesondere deren Tiefe in distaler Richtung betrachtet abnimmt.

4. Zahnteilbogen nach einem der vorhergehenden Ansprüche, **dadurch gekennzeichnet, dass** der mesiale Teil des Primärpositions-Zahnbereichs der Dentinmasse (30) zur Erreichung einer im wesentlichen gleichen Schichtstärke der Schneidemasse (32) in dem mesialen Teil diesen Zahnbereichs gewölbt ist.

5. Zahnteilbogen nach einem der vorhergehenden Ansprüche, **dadurch gekennzeichnet, dass** die Schneidemasse (32) oberhalb der Grenzfläche an Zahnübergängen eine Dicke von höchstens 1 Millimeter aufweist und insbesondere deutlich geringer als die Dicke der Schneidemasse (32) an Zahnbereichen ist.

6. Zahnteilbogen nach einem der vorhergehenden Ansprüche, **dadurch gekennzeichnet, dass** die Grenzfläche der Dentinmasse (30), in vestibulärer Richtung betrachtet, insbesondere an der vestibulären Seitenflanke eines Dentinmassenkamms, gewellt ist, wobei Wellentäler an den Einschnürungen sich mit Wellenbergen an den Zahnbereichen abwechseln und die Tiefe der Wellentäler und die Höhe der Wellenberge in distaler Richtung betrachtet abnehmen.

7. Zahnteilbogen nach einem der vorhergehenden Ansprüche, **dadurch gekennzeichnet, dass** eine von Kämmen der Dentinmasse (30) aufgespannte okklusionsnahe Fläche gegenüber der Okklusionsebene geneigt ist, insbesondere so, dass diese Fläche sich im wesentlichen äquidistant, zur Wilson - bzw. Monsonkurve erstreckt.

8. Zahnteilbogen nach Anspruch 7, **dadurch gekennzeichnet, dass** die sich an die Dentinkammebene anschließende Vestibulärfläche der Dentinmasse (30) zu dieser im wesentlichen senkrecht verläuft.

9. Zahnteilbogen nach einem der vorhergehenden Ansprüche, **dadurch gekennzeichnet, dass** die nach dem Fertigstellen des Zahnteilbogens, insbesondere dem Fertigstellen mittels Fräsens, die gefräste Schneidemasse (32), die die Dentinmasse (30) abdeckt, jeden Zahnbereich mit im wesentlichen gleicher Schichtstärke abdeckt, insbesondere mit einem Schichtstärkengradienten, der einer Abnahme der Schichtstärke in gingivaler Richtung zwischen 20 und 80 Prozent entspricht.

10. Zahnteilbogen nach einem der vorhergehenden Ansprüche, **dadurch gekennzeichnet, dass** das Volumen der Dentinmasse (30) so gewählt ist, dass unter Erstfestlegung des Primärposition-Zahnbereichs die Dentinmasse (30) virtuell in zwei Achsen um den Primärposition-Zahnbereich dahingehend schwenkbar ist, dass die Schneidemasse (32) mit einer Schichtstärke mit einer Schwankungsbreite zwischen plus/ minus 50 Prozent in die virtuelle Außenform des Zahnteilbogens passt.

11. Zahnteilbogen nach einem der vorhergehenden Ansprüche, **dadurch gekennzeichnet, dass** für die Bereitstellung eines Oberkiefer- und Unterkiefer-Zahnteilbogens eine Dentinmassenform eines dieser als Basis verwendet und zur Bereitstellung des anderen vertikal gespiegelt wird.

12. Zahnteilbogen nach einem der vorhergehenden Ansprüche, **dadurch gekennzeichnet, dass** die Dentinmassenform durch Überlagerung von Zahnformen aus Zahnbibliotheken unter dreidimensionaler Verkleinerung und Überlagerung von verschiedenen Zähnen elektronisch gewonnen ist.

13. Zahnteilbogen nach einem der vorhergehenden Ansprüche, **dadurch gekennzeichnet, dass** die Dentinmasse (30) sich in der Transluzenz zwischen 30 und 50 Prozent zu der Schneidemasse (32) unterscheidet.

14. Zahnteilbogen nach einem der vorhergehenden Ansprüche, **dadurch gekennzeichnet, dass** die Dentinmasse (30) sich in der Helligkeit oben zwischen 10 und 30 Prozent zu der Schneidemasse (32) unterscheidet.

15. Zahnteilbogen nach einem der vorhergehenden Ansprüche, **dadurch gekennzeichnet, dass** die Grenzfläche der Dentinmasse (30) zu einer transluzenten Zwischenschicht gebildet ist, die von der Schneidemassenschicht abgedeckt ist.

16. Zahnteilbogen nach einem der vorhergehenden Ansprüche, **dadurch gekennzeichnet, dass** Dentinmassen (30) aus einem Rohling in Blockgrößen zwischen 2 und 14 Zähnen, bevorzugt zwischen 2 und 5 Zähnen, gefräst sind und dass die Schneidemassen aus einem anderen Fräsblock gefertigt sind, wobei insbesondere die gingivalen Seiten der Dentinmasse (30) frei von Vertiefungen ist.

17. Zahnteilbogen nach einm der vorhergehenden Ansprüche, **dadurch gekennzeichnet, dass** jede Dentinmasse (30) des Zahnteilbogens eine aus okklusaler Richtung betrachtet gebogene Form, insbesondere mit einem im wesentlichen konstanten Radius aufweist.

18. Verfahren zum Herstellen eines Zahnteilbogens, insbesondere aus einem scheibenförmigen Fräsrohling, **dadurch gekennzeichnet, dass** basierend auf einer Zahnbibliothek mit unterschiedlichen Zahngrößen und -formen, oder einer auf Erfahrungswerten beruhenden Schichtgeometrie bestehender Zähne (10,12,14,16,18,20) eine Dentinmassenform (30) unter Überlagerung der Zahnbibliotheks-Formen und entsprechender Anpassung an eine mittlere Zahngröße und/oder Dentingröße erzeugt wird, wobei ein Primärpositions-Zahnbereich als best fit hergestellt wird und Übergänge zwischen diesem und weiteren Zahnbereichen, die distaler angeordnet sind, mit einer Wellung der Grenzfläche zur Schneidemasse (32) ausgebildet sind, deren Amplitude mindestens abschnittsweise in distaler Richtung abnimmt, wobei eine Wellung der Grenzfläche, deren Amplitude, in distaler Richtung betrachtet, in mindestens einem Teilbereich der mesial-distalen Erstreckung, abnimmt und, dass die Dentinmasse (30) einen lingual/palatinalen und einem vestibulärem Dentinmassenkamm aufweist und, dass die Welligkeit des vestibulären Dentinmassenkamms signifikant größer, insbesondere mindestens 10 mal größer, als die Welligkeit des anderen Dentinmassenkamms ist.

19. Verfahren nach Anspruch 18, **dadurch gekennzeichnet, dass** der Zahnteilbogen, insbesondere mehrere Zahnteilbögen, in einem, insbesondere im übrigen aus Schneidemasse bestehenden Fräsrohling als Block aus Dentinmasse angeordnet ist bzw. sind und dass der Zahnteilbogen durch Fräsen des Fräsrohlings, insbesondere der die Dentinmasse abdeckenden Schneidemasse, erzeugt wird.

## Claims

1. A partial dental arch, including dentine (30) and incisal materials (32) and a boundary surface therebetween, having a primary position teeth region and other teeth regions which are arranged more distally, wherein a corrugation of the boundary surface decreases in the occlusal-gingival direction, **characterized by**
- a corrugation of the boundary surface, the amplitude of which, as viewed in the distal direction, decreases in at least a sub-region of the mesial-distal extension, and
- in that the dentine material (30) has a lingual/palatal and a vestibular dentine ridge, and
- in that the corrugation of the vestibular dentine ridge is significantly larger, in particular at least 10 times larger than the corrugation of the other dentine ridge.

2. The partial dental arch according to claim 1, **characterized in that** the dentine material (30) of the partial dental arch is integrally formed with constrictions at the tooth transitions and **in that** the constriction between the primary position teeth region and the following teeth region, i.e. the secondary position teeth region, is deeper than the constriction at following tooth transitions, as viewed from the occlusal direction, and in particular is a corrugation of 10 to 30 percent of the tooth depth, as viewed from the lingual/palatal-vestibular direction.

3. The partial dental arch according to one of the preceding claims, **characterized in that** a fossa extends between a vestibular dentine ridge and another dentine ridge which fossa is limited by the primary position teeth region in the mesial direction and the width of which increases, as viewed in the distal direction, and in particular the depth of which decreases, as viewed in the distal direction.

4. The partial dental arch according to one of the preceding claims, **characterized in that** the mesial part of the primary position dental region of the dentine material (30) is vaulted to achieve a substantially equal layer thickness of the incisal material (32) in the mesial portion of this dental region.

5. The partial dental arch according to one of the preceding claims, **characterized in that** the incisal material (32) has a thickness of at most 1 millimeter above the boundary surface at tooth transitions and is in particular significantly less than the thickness of the incisal material (32) at teeth regions.

6. The partial dental arch according to one of the preceding claims, **characterized in that** the boundary surface of the dentine material (30) is corrugated, as viewed in the vestibular direction, and especially is corrugated on the vestibular lateral flank of a dentine ridge, wherein corrugated troughs and corrugated crests alternate at the constrictions at the teeth regions, and the depth of the corrugated troughs and the height of the corrugated crests decrease, ads viewed in the distal direction.

7. The partial dental arch according to one of the preceding claims, **characterized in that** an occlusal surface near the dentine material (30) is inclined in relation to the occlusal plane, in particular such that this surface substantially extends in an equidistant manner to the Wilson or Monson curve, respectively.

8. The partial dental arch according to claim 7, **characterized in that** the vestibular surface of the dentine material (30) adjoining the dentine ridge plane is substantially perpendicular thereto.

9. The partial dental arch according to one of the preceding claims, **characterized in that**, after completion of the partial dental arch, in particular following completion by milling, the milled incisal material (32) covering the dentine material (30) covers each teeth region with substantially the same layer thickness, in particular with a layer thickness gradient corresponding to a decrease in layer thickness in the gingival direction of between 20 and 80 percent.

10. The partial dental arch according to one of the preceding claims, **characterized in that** the volume of the dentine material (30) is selected such that, when first defining the primary position teeth region, the dentine material (30) can virtually be pivoted in two axes about the primary position teeth region such that the incisal material (32) of a layer thickness having a gradient between plus/minus 50 percent fits into the virtual outer shape of the partial dental arch.

11. The partial dental arch according to one of the preceding claims, **characterized in that** for providing an upper and lower partial dental arch a dentine shape of either of them is used as a base and will vertically be mirrored for providing the other one of them.

12. The partial dental arch according to one of the preceding claims, **characterized in that** the dentine shape is electronically obtained by superimposing teeth shapes from teeth libraries using three-dimensional reduction and overlay of different teeth.

13. The partial dental arch according to one of the preceding claims, **characterized in that** the dentine material (30) differs in translucency from the incisal material (32) of between 30 and 50 percent.

14. The partial dental arch according to one of the preceding claims, **characterized in that** the dentine material (30) differs in brightness at the top from the incisal material (32) of between 10 and 30 percent.

15. The partial dental arch according to one of the preceding claims, **characterized in that** the boundary surface of the dentine material (30) is formed into a translucent intermediate layer which is covered by the incisal material layer.

16. The partial dental arches according to one of the preceding claims, **characterized in that** dentine materials (30) are milled from a blank having block sizes of between 2 and 14 teeth, preferably between 2 and 5 teeth, and **in that** the incisal materials are made of a different milling block, wherein in particular the gingival sides of the dentine material (30) are free of depressions.

17. The partial dental arch according to one of the preceding claims, **characterized in that** the respective dentine material (30) of the partial dental arch has a curved shape, as viewed from the occlusal direction, and in particular having a substantially constant radius.

18. A method for producing a partial dental arch, in particular from a disc-shaped milling blank, **characterized in that**, based on a teeth library comprising different tooth sizes and shapes, or on a layer geometry of existing teeth (10, 12, 14, 16, 18, 20) which is based on empirical values, a dentine shape is produced by overlaying the teeth library shapes and correspondingly adapting a mean teeth size and/or dentine size, wherein a primary position teeth region is produced as a best fit, and transitions therebetween and other teeth regions, which are arranged more distally, are formed with a corrugation of the boundary surface to the cutting material (32), the amplitude of which decreases at least in portions in the distal direction, wherein a corrugation of the boundary surface, the amplitude of which, as viewed in the distal direction, decreases in at least a sub-region of the mesial-distal extension, and **in that** the dentine material (30) comprises a lingual/palatal dentine ridge and a vestibular dentine ridge and **in that** the corrugation of the vestibular dentine material ridge is significantly greater, and in particular is at least 10 times greater than the corrugation of the other dentine material ridge.

19. The method according to claim 18, **characterized in that** the partial tooth arch, in particular several partial tooth arches, are arranged in a milling blank, the milling blank in particular otherwise consisting of incisal material, and are arranged therein as a block of dentine material, and **in that** the partial tooth arch is produced by milling the milling blank, and in particular is produced by milling the incisal material covering the dentine material.

## Revendications

1. Arcade dentaire partielle, avec une masse dentine (30) et une masse incisale (32) et une interface entre celles-ci, avec une région de dent en position primaire et d'autres régions de dent qui sont disposées plus distalement, où une ondulation de l'interface diminue dans le sens occluso-gingival, **caractérisée par**
- une ondulation de l'interface, dont l'amplitude, vue dans le sens distal, diminue dans au moins une partie de l'extension mésiale-distale, et
- en ce que la masse dentine (30) présente une crête linguale-palatine et une crête vestibulaire de la masse dentine et
- que l'ondulation de la crête de masse dentine vestibulaire est sensiblement plus importante, en particulier au moins 10 fois plus importante, que l'ondulation de l'autre crête de masse dentine.

2. Arcade dentaire partielle selon la revendication 1, **caractérisée en ce que** la masse dentine (30) de l'arcade dentaire partielle est formée d'une seule pièce avec des rétrécissements aux transitions entre les dents et **en ce que** le rétrécissement entre la région de la dent en position primaire et la région de la dent suivante, la région de la dent en position secondaire, vue dans le sens occlusal, est plus profond que le rétrécissement aux transitions entre les dents suivantes et en particulier une ondulation de 10 à 30 % de la profondeur de la dent est vue dans le sens lingual/palatino-vestibulaire.

3. Arcade dentaire partielle selon l'une des revendications précédentes, **caractérisée en ce qu'**une fosse s'étend entre une crête de masse dentine vestibulaire et une autre crête de masse dentine, laquelle fosse étant délimitée dans le sens mésiale par la région de la dent en position primaire et dont la largeur augmente dans le sens distal et en particulier dont la profondeur diminue dans le sens distal.

4. Arcade dentaire partielle selon l'une des revendications précédentes, **caractérisée en ce que** la partie mésiale de la région de la dent en position primaire de la masse dentine (30) est courbée pour obtenir une épaisseur de couche sensiblement égale de la masse incisale (32) dans la partie mésiale de cette région de la dent.

5. Arcade dentaire partielle selon l'une des revendications précédentes, **caractérisée en ce que** l'épaisseur de la masse incisale (32) au niveau des transitions entre les dents au-dessus de l'interface est d'un millimètre et est en particulier sensiblement inférieure à l'épaisseur de la masse incisale (32) au niveau des régions des dents.

6. Arcade dentaire partielle selon l'une des revendications précédentes, **caractérisée en ce que** l'interface de la masse dentine (30), vue dans le sens vestibulaire, en particulier sur le flanc latéral vestibulaire d'une crête de masse dentine, est ondulée, où des creux d'onde aux rétrécissements alternent avec des crêtes d'onde aux régions des dents, et vue dans le sens distal la profondeur des creux d'onde et la hauteur des crêtes d'onde diminuent.

7. Arcade dentaire partielle selon l'une des revendications précédentes, **caractérisée en ce qu'**une surface proche de l'occlusion couverte par des crêtes de la masse dentine (30) est inclinée par rapport au plan d'occlusion, en particulier de manière que cette surface est essentiellement équidistante de la courbe de Wilson ou de Monson.

8. Arcade dentaire partielle selon la revendication 7, **caractérisée en ce que** la surface vestibulaire de la masse dentine (30) adjacente au plan de la crête dentine s'étend sensiblement perpendiculairement à celle-ci.

9. Arcade dentaire partielle selon l'une des revendications précédentes, **caractérisée en ce que** la masse incisive fraisée (32), qui recouvre la masse dentine (30), après finition de l'arcade dentaire partielle, en particulier après la finition par fraisage, recouvre chaque région dentaire avec sensiblement la même épaisseur de couche, en particulier avec un gradient d'épaisseur de couche qui correspond à une diminution de l'épaisseur de couche dans le sens gingival comprise entre 20 et 80 pour cent.

10. Arcade dentaire partielle selon l'une des revendications précédentes, **caractérisée en ce que** le volume de la masse dentine (30) est choisi de telle manière que, lorsque la région de la dent en position primaire est fixée pour la première fois, la masse dentine (30) peut être virtuellement pivotée sur deux axes autour de la région de la dent en position primaire de telle manière que la masse incisive (32) s'adapte à la forme extérieure virtuelle de l'arcade dentaire partielle avec une épaisseur de couche ayant une plage de variation comprise entre plus/moins 50 pour cent.

11. Arcade dentaire partielle selon l'une des revendications précédentes, **caractérisée en ce que** pour la réalisation d'une arcade dentaire partielle de la mâchoire supérieure et de la mâchoire inférieure, la forme de la masse dentine de l'une d'entre elles est utilisée comme base et pour la réalisation de l'autre est réfléchie verticalement.

12. Arcade dentaire partielle selon l'une des revendications précédentes, **caractérisée en ce que** la forme de la masse dentine est obtenue électroniquement par superposition de formes de dents provenant de bibliothèques de dents sous réduction tridimensionnelle et superposition de différentes dents.

13. Arcade dentaire partielle selon l'une des revendications précédentes, **caractérisée en ce que** la masse dentine (30) diffère en translucidité entre 30 et 50 pour cent par rapport à la masse incisive (32).

14. Arcade dentaire partielle selon l'une des revendications précédentes, **caractérisée en ce que** la masse dentine (30) diffère en luminosité au-dessus de 10 à 30 pour cent par rapport à la masse incisive (32).

15. Arcade dentaire partielle selon l'une des revendications précédentes, **caractérisée en ce que** l'interface de la masse dentine (30) est formée à une couche intermédiaire translucide qui est recouverte par la couche de masse incisive.

16. Arcade dentaire partielle selon l'une des revendications précédentes, **caractérisée en ce que** les masses dentines (30) sont fraisées à partir d'un lingotin en blocs de tailles compris entre 2 et 14 dents, de préférence entre 2 et 5 dents, et que les masses incisives sont fabriquées à partir d'un autre bloc de fraisage, où la face gingivale de la masse dentine (30) est notamment exempte de dépressions.

17. Arcade dentaire partielle selon l'une des revendications précédentes, **caractérisée en ce que** chaque masse dentine (30) de l'arcade dentaire partielle présente une forme incurvée lorsqu'elle est vue dans le sens occlusal, en particulier avec un rayon sensiblement constant.

18. Procédé de fabrication d'une arcade dentaire partielle, en particulier à partir d'un lingotin de fraisage en forme de disque, **caractérisé en ce que**, sur la base d'une bibliothèque de dents de différentes tailles et formes de dents, ou d'une géométrie de couches de dents existantes (10, 12, 14, 16, 18, 20) basée sur des valeurs empiriques, une forme de masse dentine (30) est produite avec superposition des formes de la bibliothèque de dents et adaptation correspondante à une taille de dent moyenne et/ou à une taille dentine, où une région de dent de position primaire est produite comme "best fit" et des transitions entre cette région de dent et d'autres régions de dent, qui sont disposées plus distalement, sont formées avec une ondulation de la surface limite à la masse de coupe (32) dont l'amplitude diminue au moins par sections dans le sens distal, où une ondulation de la surface limite, dont l'amplitude, vue dans le sens distal, diminue dans au moins une région partielle de l'extension mésiale-distale, et **en ce que** la masse dentine (30) présente une crête de masse dentine linguale/palatine et une crête de masse dentine vestibulaire et **en ce que** l'ondulation de la crête de masse dentine vestibulaire est sensiblement plus importante, en particulier au moins 10 fois plus importante, que l'ondulation de l'autre crête de masse dentine.

19. Procédé selon la revendication 18, **caractérisé en ce que** l'arcade dentaire, en particulier plusieurs arcades dentaires, est ou sont disposées dans un lingotin de fraisage, en particulier constituée par ailleurs de masse incisive, en tant que bloc de masse dentine et **en ce que** l'arcade dentaire est produite par fraisage de l'ébauche de fraisage, en particulier de la masse incisive recouvrant la masse dentine.
